# FASCICULE DE BREVET EUROPEEN

(11) **EP 1 100 226 B1**
(45) Date de publication et mention de la délivrance du brevet: **17.02.2010**
(21) Numéro de dépôt: 00402852.8
(22) Date de dépôt: 16.10.2000
(51) Int. Cl.: H04L 12/10, H04L 12/44

(54) **Procédé de téléalimentation d'un terminal dans un réseau local**
Verfahren zur Fernspeisung eines Endgerätes in einem lokalen Netz
Method for remote feeding of a terminal in a local area network

(30) Priorité: 04.11.1999 FR 9913834; 14.04.2000 FR 0004834; 03.07.2000 FR 0008592
(43) Date de publication de la demande: 16.05.2001
(73) Titulaire: Alcatel Lucent, 75008 Paris (FR)
(72) Inventeur: Vergnaud, Gérard, 95130 Franconville (FR); Attimont, Luc, 78100 Saint Germain en Laye (FR); Bodin, Jannick, 92380 Garches (FR); Gass, Raymond, 67150 Bolsenheim (FR); Laville, Jean-Claude, 92000 Nanterre (FR)
(74) Mandataire: Sciaux, Edmond

(56) Documents cités:
- EP-A- 0 981 227
- WO-A-96/23377
- BEARFIELD J M: "CONTROL THE POWER INTERFACE OF USB'S VOLTAGE BUS" ELECTRONIC DESIGN,US,PENTON PUBLISHING, CLEVELAND, OH, vol. 45, no. 15, 21 juillet 1997 (1997-07-21), page 80,82,84,86 XP000782898 ISSN: 0013-4872

## Description

La présente invention concerne de manière générale un réseau local informatique, par exemple de type Ethernet. Plus précisément, l'invention concerne un procédé pour téléalimenter un terminal dans un tel réseau, un dispositif de téléalimentation, un concentrateur, un répéteur, ainsi qu'un terminal adapté pour la mise en oeuvre d'un tel procédé.

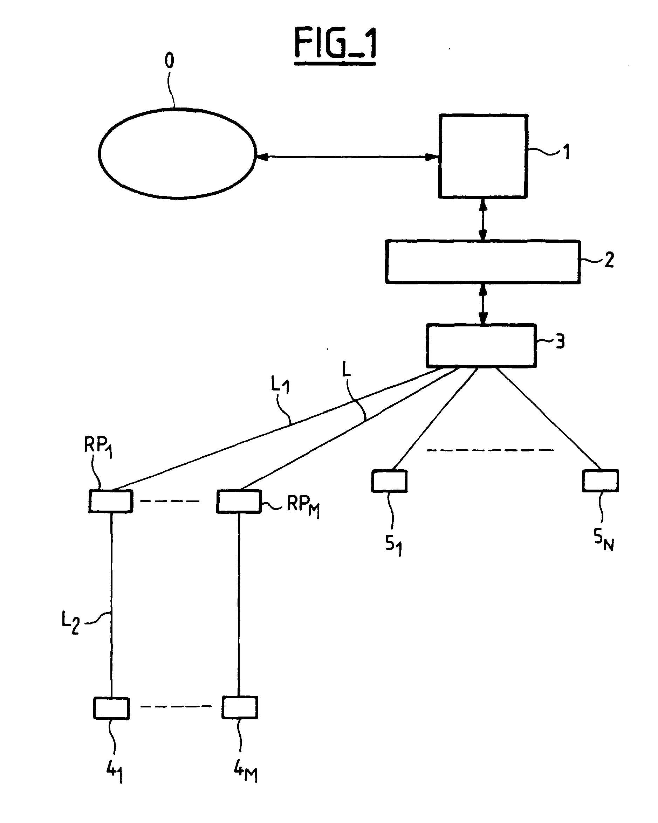

La **figure 1** représente schématiquement, à tire purement indicatif et non limitatif, un réseau local informatique de type Ethernet, qui comprend un serveur de réseau local 1, un commutateur 2, un répéteur 3 (« hub » en anglais) et N terminaux 4₁ à 4_{N}, qui sont, entre autres, des téléphones fonctionnant en mode VolP (« Voice over IP » en anglais, pour «voix par paquets sur protocole IP»). Le serveur de 1 est connecté à un réseau Internet 0 et reçoit des paquets selon le protocole TCP/IP. Les paquets d'une communication donnée sont acheminés à travers le commutateur 2 et le répéteur 3 vers un terminal, tel que le téléphone 4₁, ce dernier étant connecté au répéteur à travers une liaison L de type 8 fils, avec des connecteurs RJ45.

Classiquement, les terminaux connectés à un réseau local informatique (par exemple : ordinateurs personnels, imprimantes, etc ...) sont alimentés localement, par le secteur. Des cordons d'alimentation à 110 ou 220 Volts, indépendants des liaisons de données sont donc utilisées pour alimenter les terminaux. Cette solution augmente la difficulté de l'installation du réseau local :
- L'utilisation de deux cordons soulève des problèmes d'encombrement pouvant, en outre, limiter la liberté de mouvement des personnes.
- Elle crée des risques électriques.

Dans le cas d'un poste téléphonique, une alimentation locale, par le secteur, a en plus pour inconvénient de mettre le poste téléphonique hors service en cas de coupure de secteur, notamment en cas d'incendie ou catastrophe naturelle. C'est pourquoi les postes téléphoniques classiques sont téléalimentés par leur commutateur de rattachement, celui-ci comportant des accumulateurs de secours.

Il est donc souhaitable que certains terminaux reliés à un réseau local informatique soient téléalimentés, à travers la même liaison que celle utilisée pour émettre/recevoir des données. Il est souhaitable en outre que le dispositif de téléalimentation puisse être installé en un point quelconque de la liaison L : soit à l'intérieur, soit à l'extérieur d'un répéteur 3, pour permettre une adjonction aisée à un réseau déjà existant.

Une façon de transmettre un courant de téléalimentation consiste à utiliser deux des huit fils de la liaison L : quatre autres de ces huit fils sont deux paires de fils utilisées respectivement pour transmettre et recevoir des données. Une autre façon, dite par circuit fantôme est décrite dans le document WO 96/23377. Elle consiste à relier les deux bornes d'un générateur d'alimentation respectivement aux points milieux d'un enroulement de transformateur relié à la paire de réception de données et d'un enroulement d'un autre transformateur relié à la paire d'émission de données, dans le dispositif de téléalimentation. du côté du terminal, la tension d'alimentation est fournie respectivement par les points milieux d'un enroulement de transformateur relié à la paire de réception de données et d'un enroulement d'un autre transformateur relié à la paire d'émission de données.

Dans les deux cas, téléalimenter le terminal par le réseau local informatique a pour inconvénient que le dispositif de téléalimentation alimente de manière aveugle un terminal. Or la prise RJ45 située à l'extrémité de la liaison L peut recevoir un terminal d'un type autre qu'un téléphone (par exemple un ordinateur personnel, une imprimante, etc...). Il y a un risque d'endommager les circuits électriques de ce terminal. En effet, la prise RJ45 d'un terminal est généralement utilisée de la manière suivante :
- Quatre fils des huit fils sont séparés en deux paires pour respectivement transmettre et recevoir des données. Le terminal comporte un transformateur ayant un enroulement relié à la paire de réception, et un transformateur ayant un enroulement relié à la paire d'émission, chacun de ces enroulements ayant un point milieu qui peut être relié à un potentiel de référence via une résistance de faible valeur.
- Quatre autres fils, inutilisés, sont mis à la masse, souvent par l'intermédiaire d'une combinaison de résistances et de capacités, pour éliminer les éventuels courants de diaphonie induits par les signaux de données circulant dans les quatre premiers fils, et pour réduire les émissions électromagnétiques indésirables. Si on applique une tension d'alimentation relativement élevée, par exemple 48 Volts, sur cette combinaison de résistances et de capacités, ou sur les résistances reliées aux points milieux des transformateurs, l'intensité du courant circulant dans ces résistances peut les détruire.

Le document EP 0 981 227 décrit un procédé d'alimentation d'un terminal dans un réseau local, via une liaison destinée à relier le réseau local à ce terminal. Ce procédé connu consiste à détecter la présence d'un terminal distant téléalimentableen en deux étapes :
1) Observer si le terminal établit une liaison de données. Si c'est le cas, conclure qu'il s'agit d'un terminal informatique alimenté localement, et qu'il n'est donc pas téléalimentable.
2) Si le terminal n'établit de liaison de données, ne pas conclure immédiatement, mais faire un test en appliquant la tension de téléalimentation sur les conducteurs destinés à la téléalimentation. Ce test consiste à mesurer l'intensité du courant consommé, et comparer cette intensité par rapport à une valeur minimale et une valeur maximale prédéterminées. Si l'intensité est entre ces deux valeurs, conclure que le terminal est un terminal téléphonique téléalimentable, et continuer à appliquer la tension de téléalimentation. Dans le cas contraire, conclure que ce n'est pas un terminal téléalimentable, et arrêter immédiatement d'appliquer la tension de téléalimentation. Pour éviter que ce test cause des dommages à un terminal non téléalimentable, il est prévu en outre une limitation de l'intensité du courant, qui est forcément supérieure à l'intensité maximale que peut consommer un terminal téléalimentable.

La présente invention permet de réduire le risque de dégât quand on branche un terminal qui n'est pas un terminal destiné à être téléalimenté par le réseau.

Un premier objet de l'invention est un procédé pour téléalimenter un terminal dans un réseau local, **caractérisé en ce qu**'il consiste à :
- produire au moins un signal de test sur au moins deux conducteurs d'une liaison destinée à relier le réseau local à un terminal distant, ce signal ayant une énergie telle que le terminal ne peut être endommagé en aucun cas ;
- détecter la présence d'un terminal distant téléalimentable, consistant à détecter la présence d'une impédance prédéterminée dans le terminal distant, à partir d'un courant créé par le signal de test dans cette liaison ;
- envoyer un courant d'alimentation dans cette liaison, quand la présence d'un terminal téléalimentable est détectée.

Le procédé ainsi caractérisé évite tout risque pour les terminaux parce que le courant de téléalimentation n'est envoyé que si le terminal a été identifié comme étant téléalimentable. L'intensité et la durée du signal de test sont choisies de manière que l'opération de détection du terminal ne peut causer aucun dégât dans le cas où le terminal n'est pas un terminal pouvant être téléalimenté.

Selon un mode de mise en oeuvre particulier, pour détecter une impédance prédéterminée dans le terminal distant, il consiste à détecter la présence d'un condensateur dans le terminal distant.

Le procédé ainsi caractérisé est particulièrement simple à mettre en oeuvre. La capacité du condensateur est choisie nettement différente de celle de la liaison. La mesure d'une impédance de type capacitif permet alors la détection d'un terminal téléalimentable. Le condensateur peut être en parallèle sur deux conducteurs utilisés pour la téléalimentation, sans qu'il affecte la transmission du courant continu de téléalimentation. Selon un autre mode de mise en oeuvre particulier, pour détecter une impédance prédéterminée dans le terminal distant, il consiste à détecter la présence d'un court-circuit dans le terminal distant.

Le procédé ainsi caractérisé est particulièrement simple à mettre en oeuvre, et donc avantageux, lorsqu'on peut disposer le court-circuit entre deux conducteurs de la liaison choisis tels que le court-circuit n'empêche ni la téléalimentation, ni l'émission/réception de données.

Selon un mode de mise en oeuvre préférentiel, pour détecter la présence d'un condensateur dans le terminal distant, il consiste à :
- appliquer un signal de test en courant alternatif sur la liaison et vérifier que le terminal distant ne se comporte pas comme un circuit ouvert pour ce signal ;
- appliquer un signal de test en courant continu sur la liaison et vérifier que le terminal distant se comporte comme un circuit ouvert pour ce signal ;
- et conclure à la présence d'un terminal téléalimentable si ces deux tests ont des résultats positifs.

Selon un mode de mise en oeuvre particulier, un procédé d'alimentation adapté pour une liaison comportant deux paires d'émission/réception de données permettant chacune la transmission d'un courant de téléalimentation en mode commun, et d'autres conducteurs pouvant être utilisés aussi pour la téléalimentation, est **caractérisé en ce que** la détection d'un terminal distant téléalimentable consiste à :
- faire un premier test pour détecter si le terminal est téléalimentable par ces deux paires d'émission/réception de données ;
- faire un second test pour détecter si le terminal est téléalimentable par d'autres conducteurs susceptibles d'être utilisés aussi pour la téléalimentation ;
- envoyer un courant de téléalimentation dans les deux paires d'émission/réception de données seulement si le premier test montre que le terminal est téléalimentable par ces deux paires ;
- envoyer un courant de téléalimentation dans d'autres conducteurs susceptibles d'être utilisés aussi pour la téléalimentation seulement si le second test montre que le terminal est téléalimentable par ces autres conducteurs.

Selon un mode de mise en oeuvre particulier, le premier test consiste à détecter la présence d'une première impédance prédéterminée dans le terminal, à partir d'un courant créé par un premier signal de test dans un circuit fantôme supporté par les deux paires d'émission/réception de données ; et le second test consiste à détecter la présence d'une seconde impédance prédéterminée dans le terminal, à partir d'un courant créé par un second signal de test dans les autres conducteurs.

Préférentiellement, l'une des deux impédances prédéterminées est un court-circuit ; et l'autre impédance prédéterminée est une capacité.

Le procédé ainsi caractérisé permet d'augmenter l'intensité du courant de téléalimentation puisqu'il permet d'utiliser jusqu'à huit conducteurs dans une liaison Ethernet ; et il permet de discriminer plusieurs types de terminal téléalimentable ayant des consommations différentes. Par exemple :
- S'il détecte que le terminal n'est pas téléalimentable par les conducteurs disponibles dans une liaison Ethernet, mais est téléalimentable par un circuit fantôme sur les deux paires d'émission/réception de données, cela signifie que le terminal est d'un type à faible consommation, pour lequel il est possible et suffisant d'envoyer un courant de téléalimentation par le circuit fantôme.
- S'il détecte que le terminal est téléalimentable par les conducteurs disponibles dans une liaison Ethernet, et est téléalimentable en outre par un circuit fantôme sur les deux paires d'émission/réception de données, cela signifie que le terminal est d'un type à forte consommation, pour lequel il est possible et nécessaire d'envoyer un courant de téléalimentation par le circuit fantôme, et un autre par les conducteurs disponibles.

Un deuxième objet de l'invention est un terminal adapté pour la mise en oeuvre de ce procédé de téléalimentation, **caractérisé en ce qu**'il comporte au moins une impédance prédéterminée connectée à au moins deux conducteurs de la liaison, et qui identifie les terminaux téléalimentables.

Préférentiellement, cette impédance prédéterminée comporte une capacité de valeur très supérieure à celle des terminaisons qui sont couramment connectées à l'extrémité des liaisons, dans des terminaux non téléalimentables destinés à être reliés au réseau local considéré.

Un troisième objet de l'invention est un dispositif de téléalimentation pour la mise en oeuvre du procédé de téléalimentation, et qui est **caractérisé en ce qu**'il comporte :
- des moyens pour produire au moins un signal de test sur au moins deux conducteurs d'une liaison destinée à relier le réseau local à un terminal distant, ce signal ayant une énergie telle que le terminal ne peut être endommagé en aucun cas ;
- des moyens pour détecter la présence d'un terminal distant téléalimentable, en détectant la présence d'une impédance prédéterminée dans le terminal distant, à partir d'un courant créé par le signal de test dans cette liaison ;
- et des moyens pour envoyer un courant d'alimentation dans cette liaison, quand la présence d'un terminal téléalimentable est détectée.

Ce dispositif de téléalimentation a notamment pour avantage de pouvoir être installé en un point quelconque de la liaison : soit à l'intérieur d'un répéteur, soit à l'extérieur d'un répéteur, grâce au fait qu'il peut fonctionner complètement indépendamment des organes d'un répéteur.

Un autre but de la présente invention est de proposer un répéteur et un concentrateur qui puissent être intercalés (ensemble ou séparément) entre un dispositif de téléalimentation et un terminal (ou un autre équipement téléalimentable tel qu'un répéteur ou un concentrateur) sans perturber la discrimination, ni la téléalimentation.

Un quatrième objet de la présente invention est un répéteur téléalimentable apte à être intercalé entre un équipement de réseau comportant un dispositif de téléalimentation, et un autre équipement de réseau, dans un réseau local ;
**caractérisé en ce qu**'il comporte une alimentation téléalimentée et dont l'entrée est couplée à la liaison de manière à être en parallèle avec l'entrée d'alimentation de l'autre équipement de réseau, sur les conducteurs de la liaison qui assurent la téléalimentation ;
et en ce que cette alimentation présente une impédance d'entrée dont le module est très supérieur au module de l'impédance d'entrée d'alimentation qui est caractéristique des équipements de réseau aptes à être téléalimentés, susceptibles d'être branchés en aval de ce répéteur.

Le répéteur ainsi caractérisé ne perturbe pas la discrimination entre un équipement téléalimentable et un équipement non téléalimentable, parce que l'impédance d'entrée d'alimentation, détectée par un dispositif de téléalimentation situé en amont, reste approximativement la même quand l'impédance d'entrée d'alimentation de ce répéteur est couplée en parallèle avec celle d'un autre équipement de réseau. D'autre part, l'autre équipement de réseau et le répéteur sont téléalimentés tous les deux par le dispositif de téléalimentation situé en amont, puisque leurs entrées d'alimentation respectives sont couplées en parallèle sur les conducteurs de la liaison qui assurent la téléalimentation.

Un cinquième objet de la présente demande de brevet est un concentrateur apte à être intercalé sur une liaison entre un équipement de réseau comportant un dispositif de téléalimentation, et au moins un autre équipement de réseau, dans un réseau local ;
**caractérisé en ce qu**'il comporte, pour chacun de ses ports susceptibles d'être raccordés à un autre équipement de réseau, un dispositif de téléalimentation qui comprend :
- des moyens pour produire au moins un signal de test sur au moins deux conducteurs d'une liaison destinée à relier le concentrateur à un autre équipement de réseau, ce signal ayant une énergie telle que l'autre équipement de réseau ne peut être endommagé en aucun cas ;
- des moyens pour détecter la présence d'un autre équipement téléalimentable, en détectant la présence d'une impédance prédéterminée dans l'autre équipement, à partir d'un courant créé par le signal de test dans cette liaison ;
- et des moyens pour envoyer un courant d'alimentation dans cette liaison, quand la présence d'un autre équipement téléalimentable est détectée.

Le concentrateur ainsi caractérisé permet la téléalimentation d'équipements téléalimentables situés en aval, et il s'abstient de téléalimenter des équipements non téléalimentables parce qu'il comporte un dispositif de téléalimentation supplémentaire propre à chacun de ses ports, ce dispositif de téléalimentation supplémentaire fonctionnant de manière analogue mais indépendamment de celui situé en amont, dans un équipement de réseau tel qu'un commutateur Ethernet ou un autre concentrateur.

Selon un mode de réalisation préférentiel, ce concentrateur est lui-même téléalimentable, et est **caractérisé en ce qu**'il comprend au moins une impédance prédéterminée couplée à au moins deux conducteurs de la liaison vers l'équipement de réseau situé en amont, et qui est caractéristique de l'entrée d'alimentation des équipements aptes à être téléalimentés.

Le concentrateur ainsi caractérisé peut être intercalé sur une liaison tout en conservant pour cette liaison les avantages de la téléalimentation, puisqu'il est lui-même détectable comme étant téléalimentable et qu'il peut être téléalimenté.

D'autres caractéristiques et avantages de la présente invention apparaîtront plus clairement à la lecture de la description qui suit, en référence aux dessins annexés correspondants dans lesquels :
- La figure 1, déjà commentée, montre sous forme schématique l'architecture d'un réseau local de type Ethernet dans lequel le procédé selon l'invention peut être mis en oeuvre.
- La figure 2 représente le schéma synoptique d'un premier exemple de réalisation de dispositif de téléalimentation situé dans un concentrateur, et le schéma synoptique d'un premier exemple de réalisation de terminal téléalimenté, pour une téléalimentation via un circuit fantôme utilisant les modes communs sur deux paires d'émission/réception de données.
- La figure 3 illustre le principe de détection d'un terminal téléalimentable.
- La figure 4 représente le schémas synoptique d'une variante de réalisation du terminal téléalimenté, cette variante permettant une alimentation locale en temps normal, et une téléalimentation en cas de défaillance de l'alimentation locale, notamment en cas de coupure du secteur.
- La figure 5 représente le schéma synoptique plus détaillé du premier exemple de réalisation de dispositif de téléalimentation, qui est représenté sur la figure 2.
- La figure 6 représente schématiquement les changement d'état subis par l'exemple de réalisation représenté sur la figure 5.
- La figure 7 représente le schéma synoptique d'un deuxième exemple de réalisation de dispositif de téléalimentation situé dans un concentrateur, et d'un deuxième exemple de réalisation de terminal téléalimenté, pour une téléalimentation via un circuit fantôme utilisant les modes communs sur deux paires d'émission/réception de données, et simultanément via au moins une autre paire qui est disponible.
- La figure 8 représente le schéma synoptique plus détaillé du second exemple de réalisation de dispositif de téléalimentation, qui est représenté sur la figure 7.
- La figure 9 représente schématiquement les changement d'état subis par l'exemple de réalisation représenté sur la figure 8.
- La figure 10 représente le schéma synoptique d'un exemple de réalisation du répéteur selon l'invention, et illustre son utilisation dans une liaison où la téléalimentation est assurée seulement par un circuit fantôme.
- La figure 11 représente le schéma synoptique du même exemple de réalisation du répéteur selon l'invention, mais illustre son utilisation dans une liaison où la téléalimentation est assurée par un circuit fantôme plus deux paires disponibles.
- La figure 12 représente le schéma synoptique d'un exemple de réalisation du concentrateur téléalimentable selon l'invention, et illustre son utilisation dans une liaison où la téléalimentation est assurée par un circuit fantôme plus deux paires disponibles, alimentés par un dispositif de téléalimentation situé dans un commutateur Ethernet.
- Les figures 13 à 16 représentent des modes de réalisation préférentiels de certaines parties de l'exemple de réalisation représenté sur la figure 8.

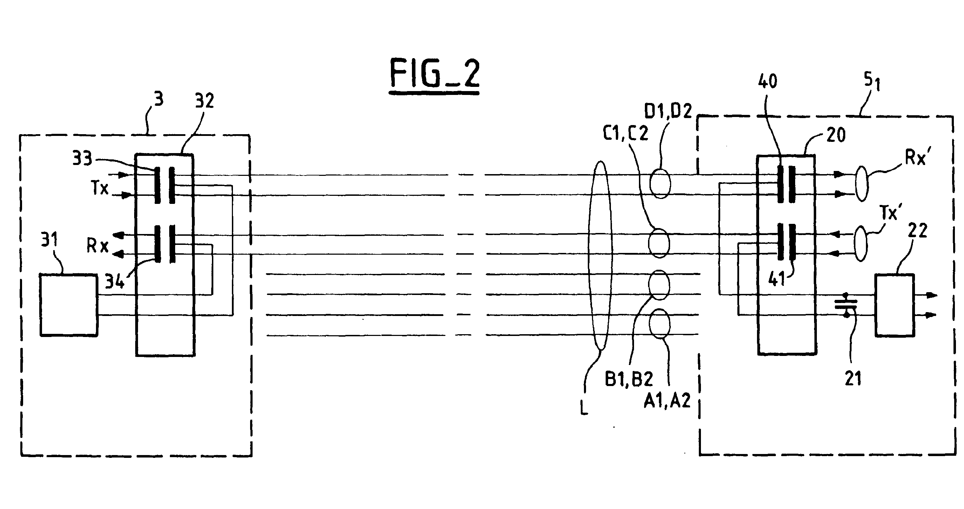

La **figure 2** représente le schéma synoptique d'un premier exemple de réalisation de dispositif de téléalimentation situé dans un concentrateur 3, et d'un premier exemple de réalisation de terminal téléalimenté 5₁, pour une téléalimentation via un circuit fantôme utilisant les modes communs sur deux paires d'émission/réception de données. La liaison L3 comporte quatre paires :
- A1, A2 non utilisée,
- B1, B2 non utilisée,
- C1, C2 utilisée pour la transmission de données vers le réseau, en mode différentiel,
- D1, D2 utilisée pour la transmission de données vers le terminal, en mode différentiel.

Les paires C1, C2 et D1, D2 sont utilisées en outre en mode commun pour téléalimenter le terminal 5₁ par un circuit fantôme.

Le concentrateur 3, comporte une unité 31 de téléalimentation et de détection de présence de terminal téléalimentable, et un combineur 32. Le combineur 32 comprend deux transformateurs 33 et 34 transmettant respectivement un signal Tx à émettre vers un terminal, et un signal Rx reçu d'un terminal. Ils comportent chacun un premier enroulement et un second enroulement. Les premiers enroulements sont reliés respectivement aux paires D1, D2 et C1, C2. Ils ont chacun un point milieu relié respectivement à une sortie de l'unité 31 de téléalimentation et de détection de présence de terminal téléalimentable. Les seconds enroulements sont reliés à d'autres organes du concentrateur 3 qui ne sont pas représentés.

Le terminal 5₁ comprend un séparateur 20 et une alimentation 22. Le séparateur 20 comprend deux transformateurs 41 et 40 respectivement pour transmettre un signal Tx' à émettre vers le concentrateur 3, et transmettre un signal Rx' reçu par le terminal 5₁. Ils comportent chacun un premier enroulement et un second enroulement. Les premiers enroulements sont reliés respectivement aux paires D1, D2 et C1, C2. Ils ont chacun un point milieu relié respectivement à une entrée de l'alimentation 22.

Une impédance 21 est prévue en parallèle sur l'entrée de l'alimentation 22. L'impédance 21 est destinée à permettre de reconnaître que ce terminal est téléalimentable. L'impédance 21 et la fréquence du signal de test sont choisies telles que le module de l'impédance 21 soit très inférieur à 75 ohms. L'impédance 21 est choisie telle qu'elle ne court-circuite pas la tension continue appliquée à l'alimentation 22, et qu'elle soit facilement distinguable par rapport aux terminaisons qui sont couramment connectées aux conducteurs disponibles des prises RJ45 des terminaux. L'impédance 21 est de préférence constituée d'une capacité au moins égale à 1 microfarad, par exemple 50 microfarads. Si l'alimentation 22 est constituée d'un convertisseur continu-continu destiné à abaisser la tension, cette capacité 21 peut être constituée par la capacité de filtrage qui se trouve classiquement à l'entrée d'un convertisseur continu-continu, puisque l'alimentation 22 est relié en parallèle sur cette impédance 21. Dans ce cas, II n'y a pas besoin de rajouter un composant pour constituer l'impédance 21, ce qui simplifie la réalisation du terminal.

La norme IEEE 802.3 prévoit que les deux paires d'émission/réception de données doivent pouvoir supporter 25V jusqu'à 500 kilohertz, en mode commun, par conséquent un signal de test ayant une tension sinusoïdal de quelques volts et une fréquence de l'ordre de 10 Kilohertz ne perturbe pas la transmission des données utiles.

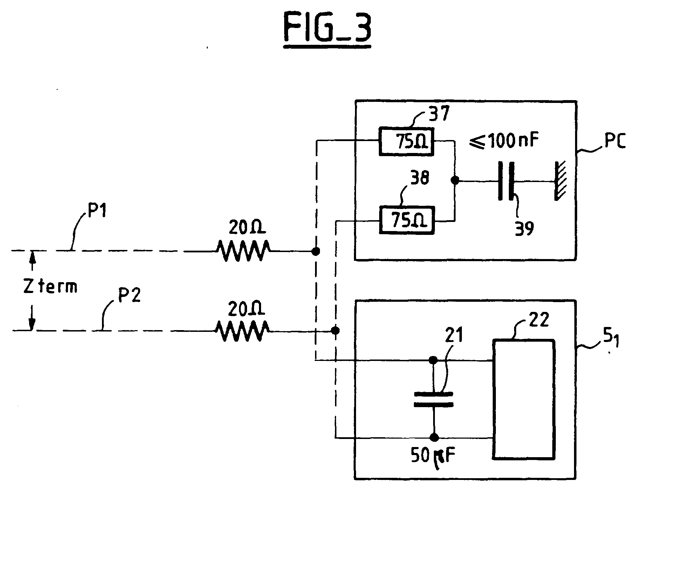

La **figure 3** illustre le principe de la discrimination des terminaux téléalimentables et de ceux qui ne le sont pas. A titre d'exemple, un terminal téléalimentable 5₁ est muni d'un condensateur 21 ayant une capacité de 50 microfarads. Cette capacité doit être distinguée d'une terminaison de liaison Ethernet, sur un ordinateur personnel PC par exemple. Cette terminaison comporte typiquement, pour chaque paire P1, P2 de la liaison, deux résistances 37 et 38 de 75 ohms, ayant chacune : une borne reliée à un conducteur de la paire considérée, et une autre borne reliée à un potentiel de référence via une capacité 39, inférieure ou égale à 100 nanofarads. Selon une variante (non représentée), les deux extrémités de la ligne sont connectées à un court-circuit relié au potentiel de référence par une résistance de 75 ohms en série avec un condensateur de capacité inférieure ou égale à 100 nanofarads.

La paire P1, P2 a une résistance de l'ordre de 20 ohms pour chaque conducteur. Pour un signal sinusoïdal à 10 Kilohertz par exemple, le module de l'impédance Zₜₑᵣₘ mesurée à l'extrémité de la liaison est donc toujours nettement supérieur à 150 ohms quand une terminaison classique est reliée à la paire. Par contre, il est toujours nettement inférieur à 150 ohms quand une capacité de 1 microfarad, ou plus, est reliée à la paire. Il suffit donc de déterminer si le module de l'impédance Zₜₑᵣₘ est inférieur ou supérieur à 150 ohms, par exemple, pour savoir si un terminal téléalimentable est présent ou non à l'extrémité de la liaison.

Selon une variante de réalisation, au lieu de téléalimenter par un circuit fantôme, il est possible de téléalimenter par :
- A1, A2 seulement ;
- ou B1, B2 seulement ;
- ou via A1, A2, B1, et B2 simultanément ;
- ou via A1, A2, B1, B2, et le circuit fantôme simultanément ;
selon la puissance nécessaire au terminal.

Selon une variante de réalisation, l'unité 31 et le combineur 32 peuvent être situés dans un boîtier séparé et complètement indépendant du 3, ce boîtier étant simplement intercalé sur la liaison L.

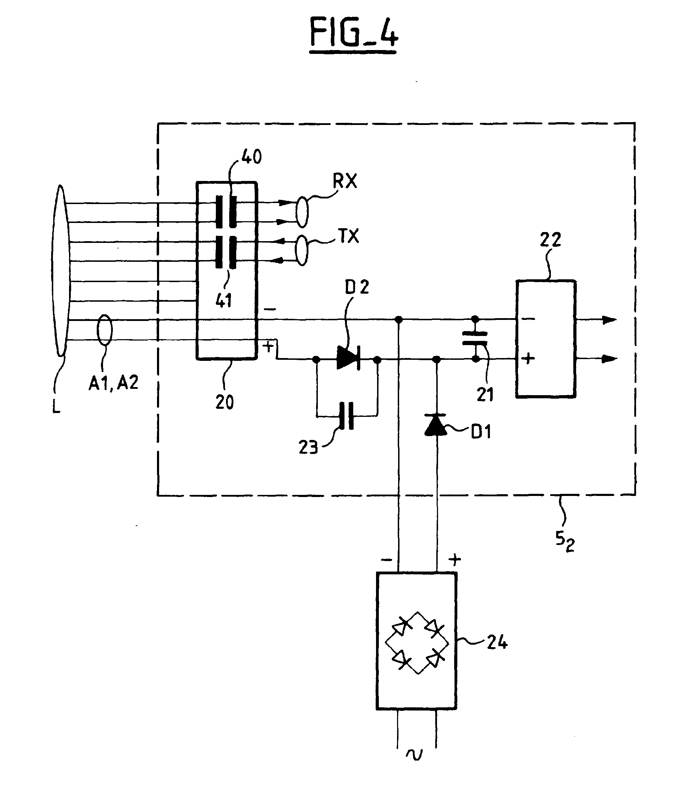

La **figure 4** représente le schémas synoptique d'une variante de réalisation du terminal selon l'invention, cette variante référencée 5₂ permettant une alimentation locale en temps normal, et une téléalimentation en cas de défaillance de l'alimentation locale, notamment en cas de coupure du secteur. A titre d'exemple, le circuit de téléalimentation passe par la paire disponible A1, A2, mais le fonctionnement est inchangé s'il passe par un circuit fantôme supporté par les deux paires démission/réception de données.

Les éléments identiques à ceux du terminal 5₁ portent les mêmes références. Ce terminal 5₂ comporte en plus une alimentation secteur classique, 24, fournissant une tension continue de 50 volts par exemple, alors que la tension de téléalimentation est de 48 volts. Le pôle positif de cette alimentation secteur 24 est relié à une entrée positive de l'alimentation 22 via une diode D1. Le pôle positif du circuit de téléalimentation est relié à l'entrée positive de l'alimentation 22 via une diode D2. En fonctionnement normal, la diode D1 est passante alors que la diode D2 est bloquée, à cause de la différence entre les deux tensions d'alimentation. En cas de défaillance du secteur, la tension fournie par l'alimentation secteur 24 s'annule, la diode D2 devient passante, et la diode D1 se bloque. L'alimentation 22 peut donc continuer à fonctionner grâce à la téléalimentation.

Pour permettre le passage d'un signal alternatif de détection du type de terminal, une capacité 23 est placée en parallèle avec la diode D2. Sa valeur est choisie de manière à présenter une impédance négligeable pour le signal de test, par exemple 1 microfarad. Un terminal à alimentation locale sécurisé par une téléalimentation est ainsi détectable comme un terminal à téléalimentation permanente.

Il est envisageable de réserver le courant de téléalimentation à des fonction essentielles du terminal, et de ne pas fournir ce courant de téléalimentation à d'autres fonctions non essentielles et grosses consommatrices d'énergie, pendant les coupures du secteurs.

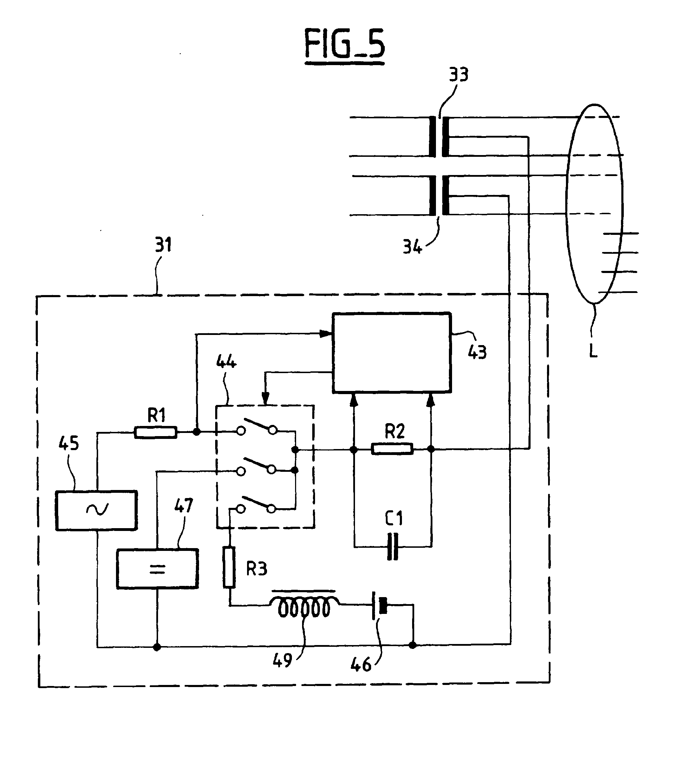

La **figure 5** représente le schéma synoptique plus détaillé du premier exemple de réalisation de dispositif de téléalimentation 31, qui est représenté sur la figure 2. Il comprend :
- un commutateur 44 ayant trois entrées et une sortie, cette dernière étant reliée au point milieu du transformateur 33 via une résistance R2 shuntée par une capacité C1 ;
- un générateur 45 de tension alternative de test (fournissant un signal sinusoïdal, de quelques volts, à 10 kilohertz par exemple), ayant une borne reliée au point milieu du transformateur 34 et une autre borne reliée à une première borne d'une résistance R1; la seconde borne de cette résistance R1 étant reliée à une première entrée du commutateur 44 ;
- un générateur 46 de tension continue, 48V par exemple, destinée à téléalimenter un terminal, ayant une borne négative reliée au point milieu du transformateur 34, et une borne positive reliée à une première borne d'une résistance R3 par une inductance 49 ; la seconde borne de cette résistance R3 étant reliée à une deuxième entrée du commutateur 44 ;
- un générateur 47 de tension continue de test (de 5 volts par exemple), ayant une borne positive reliée au point milieu du transformateur 34 et une borne négative reliée à une troisième entrée du commutateur 44 ;
- un circuit logique 43 ayant : une première entrée reliée à la seconde borne de la résistance R1; deux autres entrées reliées respectivement aux bornes de la résistance R2 et de la capacité C1 ; et une sortie qui commande le commutateur 44.

Dans cet exemple,
R1= 75 ohms,
R2 = 1 ohm,
R3= 10 ohms,
C1 = 1 microfarad.

L'inductance 49, en série avec le générateur 46, a une valeur telle que, lorsque les générateurs 45 et 46 sont couplés simultanément au terminal distant, l'atténuation du signal de test en courant alternatif, provoquée par le générateur 46, soit négligeable. Dans d'autres modes de réalisation, cette fonction peut être remplie au moyen d'un circuit actif.

La valeur de R2 est choisie de façon à définir l'intensité maximale du courant de téléalimentation dans la ligne, et la valeur de C1 est choisie de façon à transmettre le signal alternatif de détection, avec une atténuation négligeable. La tension du générateur alternatif 45 et la valeur de la résistance R1 sont choisies de façon à faire circuler un courant de test ayant une intensité sans danger pour tout terminal susceptible d'être connecté au bout de la liaison, notamment si c'est un terminal non téléalimentable. La tension continue de test fournie par le générateur 47 est très inférieure à la tension de téléalimentation, pour être sans danger pour les terminaux non téléalimentables. D'autre part, elle est insuffisante pour faire démarrer l'alimentation d'un terminal téléalimentable. Cette alimentation est donc vue comme un circuit ouvert lors du test en courant continu.

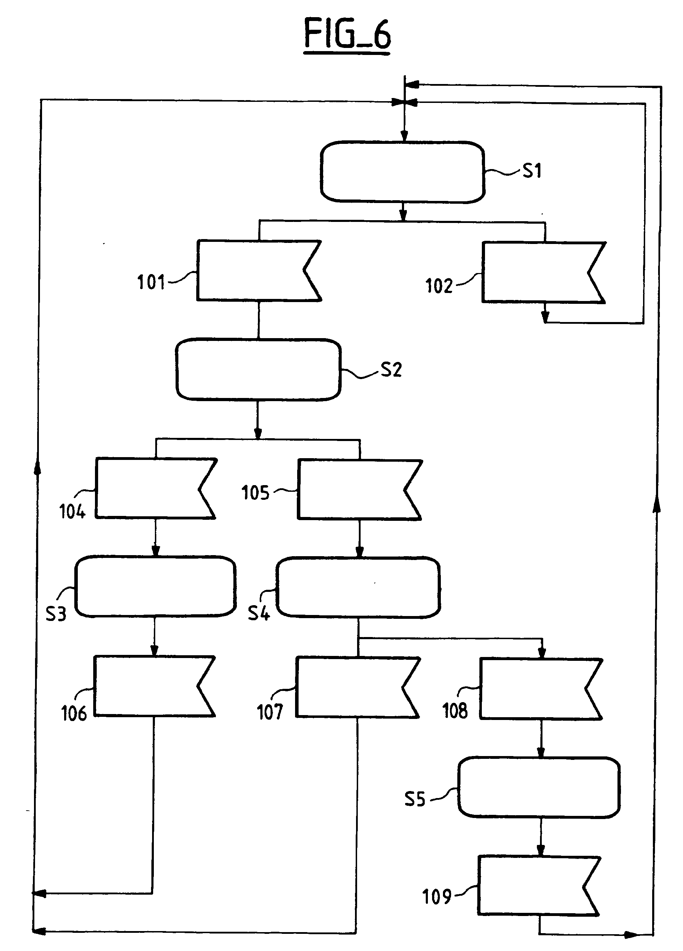

La **figure 6** représente schématiquement les changement d'état subis par l'exemple de réalisation de l'unité 31 représenté sur la figure 5. Lors du démarrage de l'unité 31, elle est dans un état S1 pour réaliser un test en courant alternatif pour la détection de présence d'un terminal téléalimentable : le circuit logique 43 actionne le commutateur 44 pour relier seulement sa première entrée à sa sortie. La tension de téléalimentation n'est pas appliquée à la liaison L, il n'y a donc pas de risque pour un terminal classique. Le commutateur 44 transmet un courant alternatif. Le circuit logique 43 compare la valeur de la tension alternative présente sur la deuxième borne de la résistance R1 avec une valeur de seuil correspondant à un module de l'impédance Zₜₑᵣₘ égal à 50 ohms par exemple. Il y a deux événements possibles :
- Evénement 102 : le module est supérieur à 50 ohms, c'est un circuit ouvert pour le courant alternatif, donc il n'y a aucun terminal connecté au bout de la liaison, le circuit 43 reste dans son état S1 pour continuer ce test en courant alternatif.
- Evénement 101 : le module est inférieur à 50 ohms, il y a un court-circuit au moins pour le courant alternatif, donc il peut y avoir un terminal téléalimentable connecté au bout de la ligne, ou bien un court-circuit entre deux conducteurs de la ligne ; le circuit 43 passe à l'état S2 qui va permettre de discriminer ces deux cas, au moyen d'un test en courant continu, avec une faible tension et une courte durée. Lors de ce test, l'alimentation 22 présente une résistance élevée parce qu'elle reçoit une tension d'entrée insuffisante pour pouvoir démarrer.
Le test réalisé dans l'état S2 conduit à deux événements possibles :
- Evénement 105 : la résistance est supérieure à 50 ohms, c'est un circuit ouvert pour le courant continu, donc il n'y a aucun terminal classique connecté au bout de la liaison ; c'est un terminal téléalimentable ou un terminal à alimentation locale sécurisé par téléalimentation. Le circuit 43 passe dans un état S4 pour téléalimenter ce terminal tout en continuant le test en courant alternatif afin de détecter une déconnexion éventuelle du terminal qui a été détecté.
- Evénement 104 : la résistance est inférieure à 50 ohms, donc il y a un court-circuit pour le courant continu dans le terminal ou sur la liaison ; il y a donc un terminal classique (ayant une terminaison comportant un court-circuit) ou bien il y a un court-circuit accidentel dans lequel il ne faut pas envoyer le courant de téléalimentation ; le circuit 43 passe à l'état S3 qui va permettre de surveiller une éventuelle disparition de ce court-circuit.

Dans l'état S3, le circuit 43 fait périodiquement, par exemple une fois par seconde, un test à faible tension continue et à faible durée pour détecter la déconnexion d'un terminal classique. L'unité 31 fournit un courant continu d'intensité et de durée suffisamment faible pour tester la présence d'un terminal classique sans risquer de le détériorer. Le circuit 43 actionne le commutateur 44 pour relier seulement sa deuxième entrée à sa sortie, pendant une durée de 150 millisecondes seulement. Au bout de 100 millisecondes (nécessaires pour qu'une éventuelle capacité ait le temps de se charger), le circuit 43 mesure la tension aux bornes de R2. Si cette tension est nulle, c'est que le circuit est ouvert pour le courant continu. Pendant ce test, la tension de téléalimentation n'est pas appliquée à la liaison L. La tension appliquée pour le test est de 5 volts dans cet exemple. Il n'y a donc pas de risque pour un terminal. Le circuit logique 43 compare la valeur de la tension continue mesurée sur les bornes de la résistance R2 avec une seule valeur de seuil, correspondant par exemple à une résistance égale à 50 ohms.

Ce test est réitéré jusqu'à ce que la valeur devienne supérieure à 50 ohms (Evénement 106) : Le circuit 41 repasse alors dans l'état S1 pour détecter la connexion éventuelle d'un terminal téléalimentable.

Dans l'état S4, l'unité 31 fournit un courant de téléalimentation au terminal téléalimentable qui a été détecté, et surveille l'apparition de deux événements possibles :
- une éventuelle déconnexion du terminal téléalimentable qui a été détecté,
- ou une éventuelle défaillance de la liaison ou du terminal, créant un court-circuit pour le courant continu.
Le circuit 43 actionne le commutateur 44 pour relier simultanément sa première entrée et sa troisième entrées à sa sortie. Un courant de téléalimentation est donc fourni à la liaison L. Le générateur 45 fournit un courant alternatif permanent superposé au courant continu de téléalimentation, pour surveiller la présence du terminal téléalimentable détecté. Un courant continue circule dans la résistance R2 tant que le terminal téléalimentable connecté est au bout de la ligne L. Le circuit 43 surveille la chute de tension aux bornes de la résistance R2. Il compare la valeur de la tension alternative présente sur la deuxième borne de la résistance R1 avec une valeur de seuil correspondant à un module de l'impédance Zₜₑᵣₘ égal à 50 ohms. D'autre part, il compare la valeur de la tension continue aux bornes de R2 avec une valeur de seuil correspondant à une résistance de 50 ohms.

Pendant l'état de S4, il peut y avoir deux événements :
- Evénement 107 : le module de l'impédance en alternatif devient supérieur à 50 ohms, le circuit est ouvert pour le courant alternatif, donc le terminal téléalimentable a été déconnecté ; le circuit 43 repasse à l'état S1. La tension de téléalimentation n'étant plus appliquée à la liaison, un autre terminal quelconque peut donc être branché en toute sécurité.
- Evénement 108: la résistance au courant continu est inférieure à 50 ohms, donc il y a un court-circuit, soit sur la liaison, soit dans le terminal. Le circuit 43 passe dans un état S5 où il arrête la téléalimentation pendant 30 secondes, par exemple, pour éviter toute détérioration par le courant de téléalimentation. Puis il repasse à l'état S1 où les tests réalisés précédemment sont réitérés.

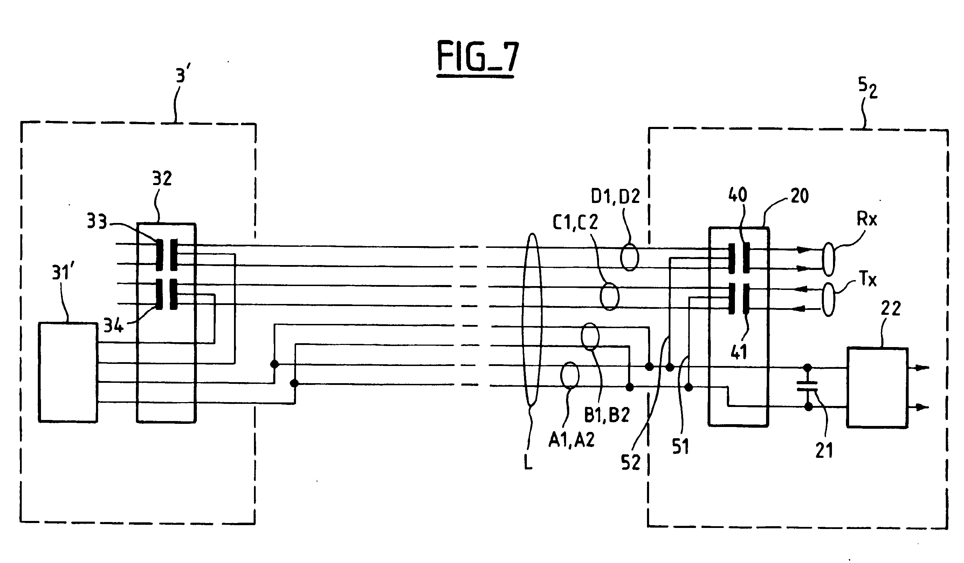

La **figure 7** représente le schéma synoptique d'un deuxième exemple de réalisation 31' du dispositif de téléalimentation, situé dans un concentrateur 3', et un deuxième exemple de réalisation 5₂ d'un terminal téléalimenté. Ce deuxième exemple est destiné à alimenter des terminaux nécessitant une intensité trop élevée pour être supportée seulement par le circuit fantôme établi sur les deux paires d'émission/réception de données, ou supportée seulement par les deux paires disponibles. Il est possible de répartir le courant de téléalimentation de manière équitable sur les quatre paires de la liaison, c'est à dire le circuit fantôme plus les deux paires disponibles. Cela permet de doubler l'intensité de téléalimentation. Mais il est alors nécessaire de vérifier que le terminal est apte à recevoir un courant de téléalimentation sur toutes ces paires. Si l'unité de téléalimentation testait seulement le circuit fantôme et si elle envoyait ensuite la tension de téléalimentation sur toutes les paires, elle pourrait détruire des terminaisons placées aux extrémités des paires disponibles dans des terminaux téléalimentables seulement par le circuit fantôme.

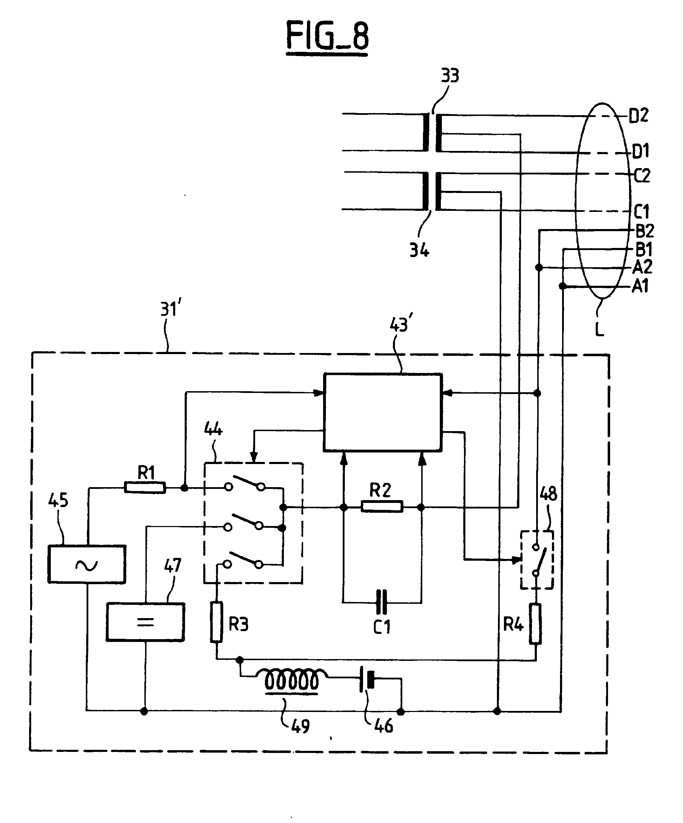

L'unité 31' de téléalimentation et de détection de terminal téléalimentable qui est représentée sur les figures 7 et 8 permet de vérifier que le terminal est téléalimentable par le circuit fantôme et de vérifier que le terminal est téléalimentable en outre par les deux paires disponibles. Elle permet de distinguer ainsi trois types de terminal :
- un terminal non téléalimentable,
- un terminal téléalimentable seulement par le circuit fantôme,
- et un terminal téléalimentable à la fois par le circuit fantôme et par les deux paires disponibles.

Il est à la portée de l'Homme de l'Art d'adapter l'unité 31' pour permuter le test des paires disponibles et le test du circuit fantôme pour distinguer ainsi trois types de terminal :
- un terminal non téléalimentable,
- un terminal téléalimentable seulement par les paires disponibles,
- et un terminal téléalimentable à la fois par le circuit fantôme et par les deux paires disponibles.

L'unité 31' comporte quatre accès dans cet exemple. Deux accès sont reliés respectivement aux points milieux des transformateurs 33 et 34. Le circuit fantôme utilise les modes communs sur les deux paires C1, C2, et D1, D2 d'émission/réception de données. Un troisième accès est relié aux conducteurs disponibles A1 et B1. Un quatrième accès est relié aux conducteurs disponibles A2 et B2.

Dans le terminal 5₂, les extrémités des conducteurs A1 et B1 sont reliées ensemble à un premier accès de l'alimentation 22, et sont reliées par un court-circuit 51 au point milieu du transformateur 41, c'est à dire à l'une des bornes du circuit fantôme. Les extrémités des conducteurs A2 et B2 sont reliées ensemble à un second accès de l'alimentation 22, et sont reliées par un court-circuit 52 au point milieu du transformateur 40, c'est à dire à l'autre borne du circuit fantôme. Comme précédemment, une capacité 21 est en parallèle sur les deux accès de l'alimentation 22.

L'unité 31' envoie une moitié du courant de téléalimentation via le circuit fantôme, et une moitié via les paires A1, A2, B1, B2. Le signal alternatif de test est superposé au courant de téléalimentation.

La **figure 8** représente le schéma synoptique plus détaillé du second exemple de réalisation de dispositif de téléalimentation, qui est représenté sur la figure 7. L'unité 31' de téléalimentation et de détection de terminal téléalimentable comporte, en plus des éléments constituant l'unité 31 précédemment décrite :
- une résistance R4 ayant une première borne reliée au point commun de la résistance R3 et de l'inductance 49 ;
- et un second commutateur 48 ayant une entrée, une sortie, et une entrée de commande.

Le circuit logique 43 est remplacé par un circuit logique 43'. Il commande les commutateurs 44 et 48. L'entrée du commutateur 48 est reliée à une seconde borne de la résistance R4. Celle-ci a la même valeur que R3 ; R3 et R4 servant à répartir équitablement le courant de téléalimentation entre le circuit fantôme et le circuit passant par les paires A1, A2, B1, B2. La sortie du commutateur 48 est reliée aux conducteurs A2 et B2 de la liaison L. Les conducteurs A1 et B1 sont reliés au point commun du générateur 45, du générateur 47, du générateur 46, et du point milieu du transformateur 34.

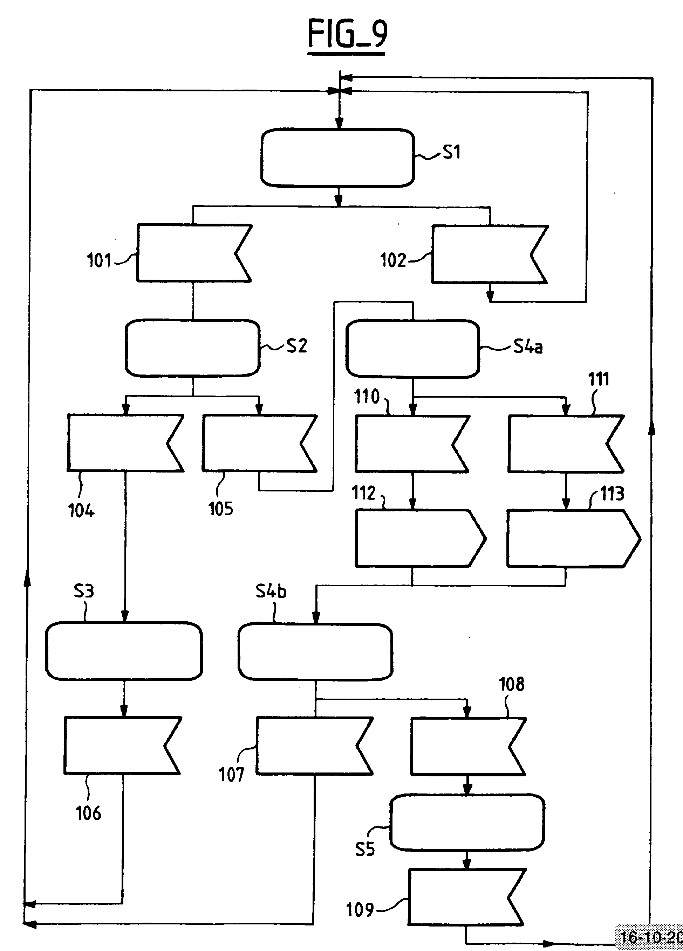

La **figure 9** représente schématiquement les changement d'état subis par l'exemple de réalisation représenté sur la figure 8. Au démarrage, et tant que le terminal n'a pas été identifié comme pouvant être téléalimenté à la fois par le circuit fantôme et par les paires disponibles, l'entrée du commutateur 48 n'est pas reliée à sa sortie. Le générateur 46 n'applique donc aucune tension au terminal. Les états sont les mêmes que pour l'unité 31, sauf que l'événement 105 qui est la détection d'un circuit ouvert en courant continu qui permet de conclure que c'est un terminal téléalimentable par le circuit fantôme (ou à alimentation locale secourable par téléalimentation), n'est pas suivi immédiatement par l'état S4 qui téléalimente le terminal.

L'unité 31' passe dans un état S4a où le circuit 43' fait un test à faible tension continue et à faible durée pour tester en outre les paires disponibles A1, A2, B1, B2. Il actionne le commutateur 44 pour relier seulement sa deuxième entrée à sa sortie, pendant une durée de 150 millisecondes seulement. Le circuit logique 43' vérifie s'il y a une tension continue sur les conducteurs A2, B2.
- Evénement 111 : Le circuit 43' a détecté une tension continue en retour sur les conducteurs A2, B2 parce que le circuit fantôme (au point milieu du transformateur 40) est relié à ces conducteurs dans le terminal par le court-circuit 52. Ceci signifie que le terminal est téléalimentable en outre par les paires disponibles. Le circuit 43' commande le commutateur 48 pour qu'il relie son entrée et sa sortie. Ainsi le générateur 46 applique une tension de téléalimentation sur les paires disponibles. Puis le circuit 43' passe dans un état S4b analogue à l'état S4 décrit précédemment, où il téléalimente le terminal par le circuit fantôme en plus de la téléalimentation par les paires disponibles.
- Evénement 110 : Le circuit 43' n'a pas détecté une tension continue en retour sur les conducteurs A2, B2 parce que le circuit fantôme n'est pas relié à ces conducteurs dans le terminal. Ceci signifie que le terminal n'est pas téléalimentable par les paires disponibles. Le circuit 43' laisse le commutateur 48 ouvert. Ainsi le générateur 46 n'applique pas de tension de téléalimentation sur les paires disponibles, il n'y a aucun risque d'endommager le terminal. Puis le circuit 43' passe dans un état S4b identique à l'état S4 décrit précédemment, où il téléalimente le terminal par le circuit fantôme uniquement.

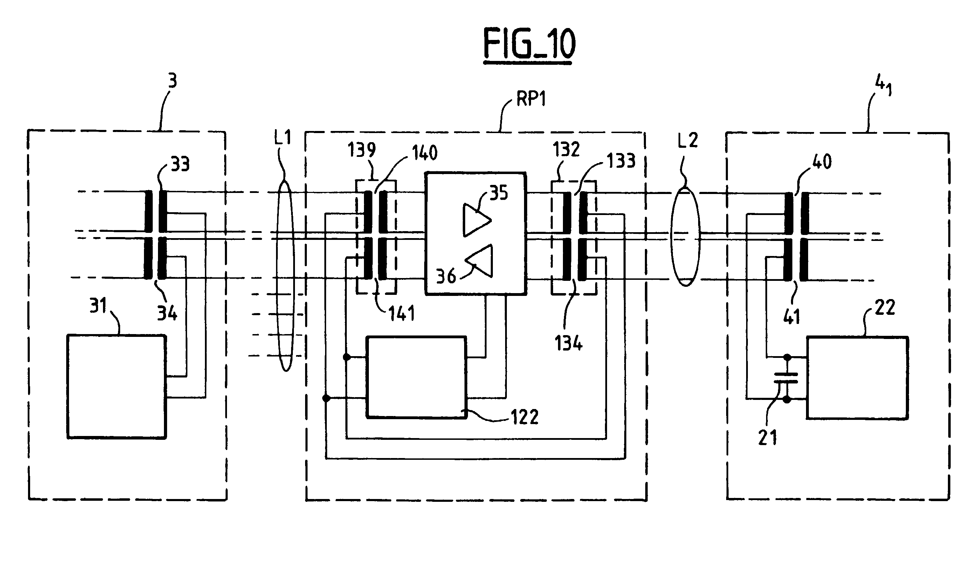

La **figure 10** représente le schéma synoptique d'un exemple de réalisation RP1 du répéteur selon l'invention, et illustre son utilisation dans une liaison où la téléalimentation est assurée seulement par un circuit fantôme. Dans un concentrateur 3, chaque port comporte un dispositif de téléalimentation 31 tel que décrit précédemment, qui assure les fonctions de détection et de téléalimentation. Le port considéré dans cet exemple est raccordé à un terminal 4₁ via le répéteur RP1 qui est nécessaire à cause de la longueur de la ligne. Le concentrateur 3 est relié au répéteur RP1 par un tronçon de liaison L1. Le terminal 4₁ est relié au répéteur RP1 par un tronçon de liaison L2, et comporte : un séparateur constitué de deux transformateurs 40 et 41, une alimentation 22, et une capacité 21 en parallèle sur les bornes d'entrée de cette alimentation 22, comme décrit précédemment.

Le répéteur RP1 comporte :
- un séparateur 139 et un combineur 132 ;
- une alimentation 122 ;
- et deux circuits régénérateurs 35 et 36.

Le combineur 132 comprend deux transformateurs 133 et 134 transmettant respectivement un signal à émettre vers le terminal 4₁, et un signal reçu du terminal 4₁. Ils comportent chacun un premier enroulement et un second enroulement. Les premiers enroulements sont reliés respectivement aux paires de transmission de données de la liaison L₂. Ils ont chacun un point milieu. Le second enroulement du transformateur 133 est relié à des sorties différentielles du circuit régénérateur 35. Le second enroulement du transformateur 134 est relié à des entrées différentielles du circuit régénérateur 36.

Le séparateur 139 comprend deux transformateurs 140 et 141 transmettant respectivement le signal à émettre vers le concentrateur 3, et le signal reçu du concentrateur 3. Ils comportent chacun un premier enroulement et un second enroulement. Les premiers enroulements sont reliés respectivement aux paires de transmission de données de la liaison L₁. Le point milieu du premier enroulement du transformateur 140 est relié à une première borne entrée de l'alimentation 122, et au point milieu du transformateur 133. Le point milieu du premier enroulement du transformateur 141 est relié à une seconde borne d'entrée de l'alimentation 122, et au point milieu du transformateur 134. Le second enroulement du transformateur 141 est relié à des sorties différentielles du circuit régénérateur 36. Le second enroulement du transformateur 140 est relié à des entrées différentielles du circuit régénérateur 35.

Les liaisons entre les points milieux des transformateurs 140, 141, 133, 134, permettent de raccorder directement le circuit fantôme du tronçon L1 au circuit fantôme du tronçon L2 pour assurer le passage du courant continu de téléalimentation, et des signaux de test (en courant continu et en courant alternatif). Il n'y a pas de capacité branchée sur les bornes d'entrée de l'alimentation 122 du répéteur, et cette alimentation est conçue de façon à présentée une impédance d'entrée ayant un module de valeur très supérieure à 50 ohms lors du test en courant alternatif. En effet, le répéteur RP1 est téléalimenté par le dispositif de téléalimentation 31 mais il ne doit l'être que dans le cas où un terminal téléalimentable 4₁ est effectivement relié au répéteur RP1. Le répéteur RP1 tout seul ne doit donc pas être détecté comme un terminal téléalimentable. La réalisation d'une alimentation 122 présentant une impédance d'entrée très supérieure à 50 ohms pour le signal alternatif de test est à la portée de l'homme de l'Art. Par exemple, l'étage d'entrée de cette alimentation peut comporter une inductance ou un circuit actif équivalent à une inductance.

Lors du test en courant alternatif (Etat S1, sur la figure 6), le dispositif de téléalimentation 31 détecte un circuit fermé en courant alternatif si et seulement si un terminal téléalimentable 4₁ est raccordé, grâce à la capacité 21 placée dans le terminal 4₁. Ensuite, lors du test en courant continu (Etat S2), l'alimentation 122 et l'alimentation 22 présentent chacune une résistance élevée parce qu'elles reçoivent une tension d'entrée insuffisante pour pouvoir démarrer. Si le dispositif de téléalimentation 31 constate qu'il n'y a pas de court-circuit en courant continu, il conclut qu'un terminal téléalimentable est raccordé. Le répéteur est donc transparent vis à vis du dispositif de téléalimentation 31.

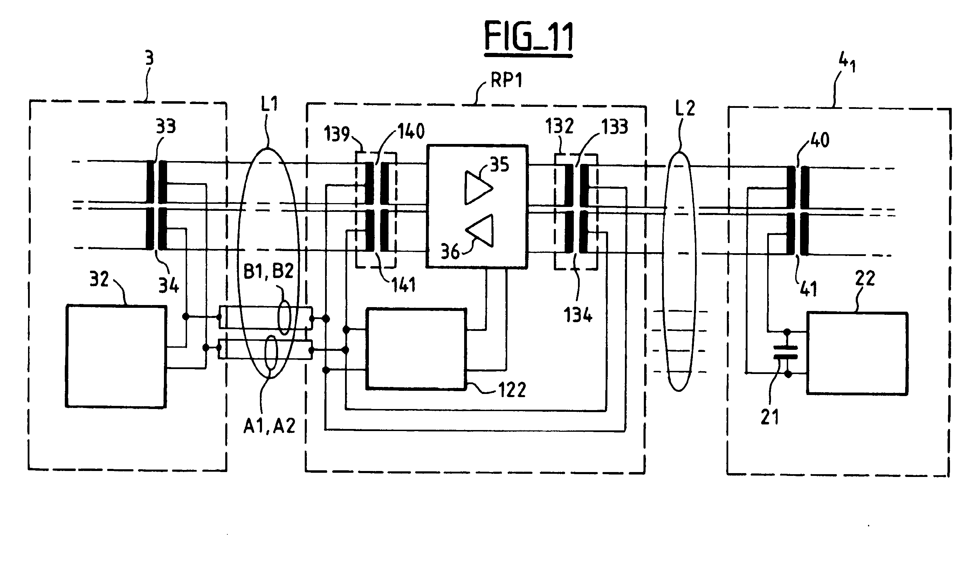

La **figure 11** représente le schéma synoptique du même exemple de réalisation du répéteur selon l'invention, mais illustre son utilisation dans une liaison où la téléalimentation est assurée par un circuit fantôme plus deux paires disponibles A1, A2 et B1, B2. Ces deux paires disponibles sont utilisées seulement dans le tronçon de liaison L1 car elles permettent d'apporter le surplus d'énergie correspondant aux besoins des circuits du répéteur RP1. Les deux conducteurs A1 et A2 relient ensemble le point milieu du transformateur 33 au point milieu du transformateur 140. Les deux conducteurs B1 et B2 relient ensemble le point milieu du transformateur 34 au point milieu du transformateur 141.

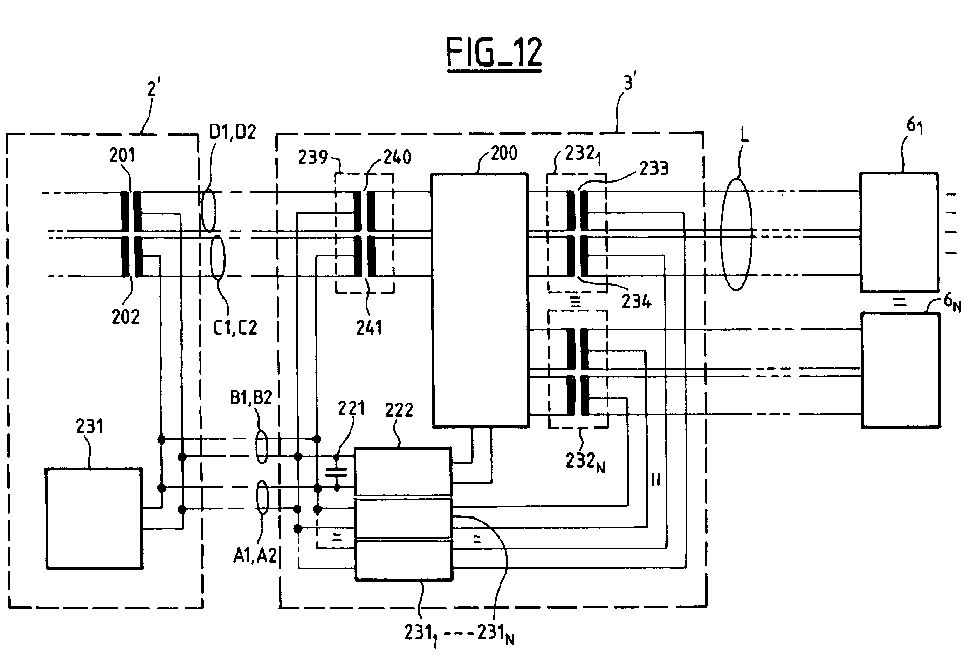

La **figure 12** représente le schéma synoptique d'un exemple de réalisation 3' du concentrateur, selon l'invention. Dans un commutateur Ethernet 2', un dispositif de téléalimentation 231 et un combineur constitué de deux transformateurs 201 et 202 analogues à ceux décrit précédemment pour un concentrateur 3, assurent les fonctions de détection et de téléalimentation pour le port considéré sur ce commutateur 2'. Le concentrateur 3' est relié à ce port. Il comporte lui-même N ports reliés respectivement à N terminaux 5₁, ..., 5_{N} par des liaisons individuelles L.

Ce concentrateur 3' est téléalimentable, et sa téléalimentation est assurée par un circuit fantôme sur deux paires D1, D2, C1, C2, plus deux paires disponibles B1, B2, A1, A2, de la liaison vers le commutateur 2', alimentées par le dispositif de téléalimentation 231 situé dans le commutateur 2'.

Dans le concentrateur 3', chaque port comporte: un dispositif de téléalimentation, respectivement 231₁, ..., 231_{N}, analogue au dispositif 31 décrit précédemment; et un combineur, respectivement 232₁, ..., 232_{N}, analogue au combineur 32 décrit précédemment ; qui assurent les fonctions de détection et de téléalimentation. Le concentrateur 3' comporte en outre :
- un séparateur 240 ;
- une alimentation 222 ;
- une capacité 221 en parallèle sur l'entrée de l'alimentation 222 ;
- et un circuit concentrateur classique 200.

Par exemple, le combineur 232₁ comprend deux transformateurs 233 et 234 transmettant respectivement un signal à émettre vers un terminal 6₁, et un signal reçu du terminal 6₁. Ils comportent chacun un premier enroulement et un second enroulement. Les premiers enroulements sont reliés respectivement aux paires de transmission de données de la liaison L vers le terminal 6₁. Ils ont chacun un point milieu. Le second enroulement du transformateur 233 est relié à des sorties différentielles du circuit concentrateur 200. Le second enroulement du transformateur 234 est relié à des entrées différentielles des circuits concentrateurs 200.

Le séparateur 239 comprend deux transformateurs 240 et 241 transmettant respectivement le signal reçu du concentrateur 2' et le signal à émettre vers le concentrateur 2'. Ils comportent chacun un premier enroulement et un second enroulement. Les premiers enroulements sont reliés respectivement aux paires D1, D2, C1, C2 de transmission de données. Le point milieu du premier enroulement du transformateur 240 est relié à une première borne entrée de l'alimentation 222, à une première borne entrée de chaque dispositif de téléalimentation 231₁,....., 231_{N}, et aux fils disponibles A1, B1. Le point milieu du premier enroulement du transformateur 241 est relié à une seconde borne d'entrée de l'alimentation 222, à une seconde borne d'entrée de chaque dispositif de téléalimentation 231₁,....., 231_{N}, et aux fils disponibles A2, B2. Le second enroulement du transformateur 141 est relié à des sorties différentielles du circuit concentrateur 200. Le second enroulement du transformateur 240 est relié à des entrées différentielles du circuit concentrateur 200.

Le concentrateur 3' doit être téléalimenté quels que soit les terminaux auxquels il est raccordé. Même si aucun de ces terminaux n'est téléalimentables, ils ont besoin du fonctionnement du concentrateur 3'. Le concentrateur 3' est détecté par le dispositif de téléalimentation 231 comme un terminal téléalimentable, grâce à la présence de la capacité 121 (au moins égale à un microfarad). Celle-ci peut-être constituée de la capacité de filtrage qui est classiquement placée en entrée d'une alimentation.

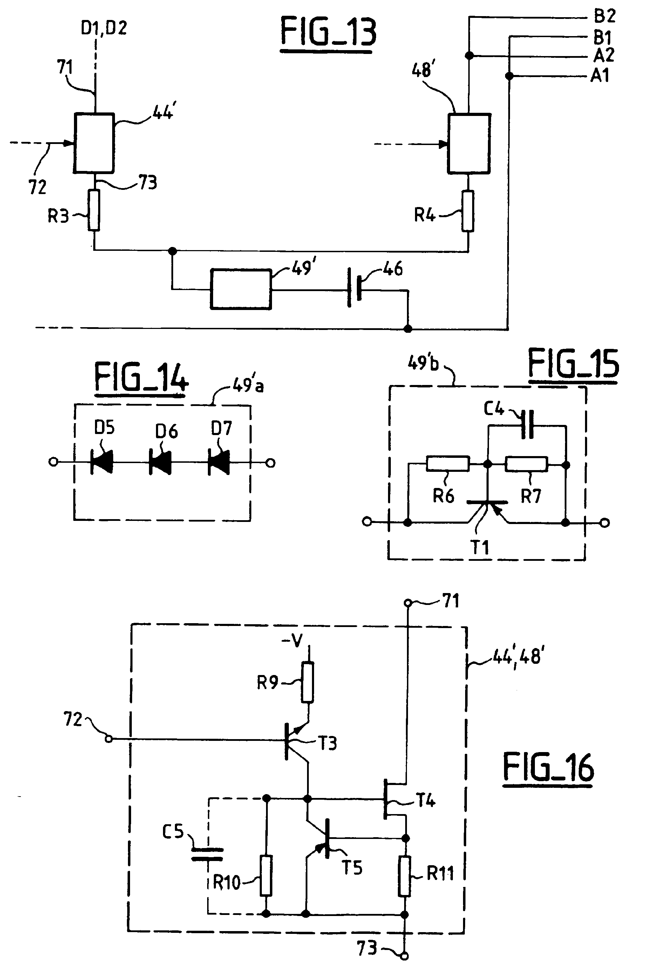

La **figure 13** représente partiellement le schéma synoptique d'une variante de l'exemple de réalisation représenté sur la figure 8. Parmi les trois commutateurs 44, celui qui est relié à la résistance R3, d'une part, et à la résistance R2, d'autre part, est constitué préférentiellement d'un circuit électronique 44' représenté sur la figure 16. Le commutateur 48 qui est relié à la résistance R4, d'une part, et aux conducteurs A2 et B2, d'autre part, est constitué préférentiellement d'un circuit électronique 48' identique au commutateur 44'. L'inductance 49 est remplacée préférentiellement par un circuit électronique 49' de blocage d'un courant alternatif, soit 49'a, soit 49'b, respectivement représentés sur les figures 14 et 15.

La **figure 14** représente le schéma synoptique d'un premier exemple 49'a de réalisation préférentiel de ce circuit électronique de blocage d'un courant alternatif 49'. Cet exemple comporte trois diodes au silicium D5, D6, D7. Le générateur de signal de test alternatif est tel que la tension alternative qui est appliquée aux borne du circuit 49'a est égale à 1,2 volt dans cet exemple. La caractéristique intensité/tension de toute diode au silicium est non linéaire et présente un seuil à 0,6 volt environ. Au-delà de ce seuil, la résistance dynamique est négligeable. Ces diodes D5, D6, D7 présentent ensemble un seuil d'environ 1, 8 volt. Lorsqu'elles ne sont pas parcourues par le courant de téléalimentation, elles présentent donc une conductance négligeable pour le signal alternatif de test.

Celui-ci n'est donc pas absorbé par le générateur de tension continue 46, lorsqu'aucun terminal téléalimentable n'est branché sur la ligne. Lorsqu'un terminal téléalimentable est branché sur la ligne, le signal de test alternatif est absorbé mais cela n'a pas d'importance puisqu'à ce moment là le signal de test n'a pas à jouer son rôle de détection de la déconnexion d'un terminal. Il est à la portée de l'Homme de l'Art d'adapter le nombre de diodes à semi-conducteur, en fonction de la tension alternative du signal de test.

La **figure 15** représente le schéma synoptique d'un second exemple 49'b de réalisation préférentiel de ce circuit électronique de blocage d'un courant alternatif 49', qui comporte au moins un transistor se comportant comme un générateur de courant continu. Cet exemple 49'b comporte un transistor bipolaire T1 dont le collecteur et l'émetteur constituent respectivement les deux bornes du circuit 49'b. La base est alimentée par un pont de deux résistances R6 et R7, placé entre ces deux bornes. Une capacité C4 est placée entre la base et l'émetteur. La constante de temps de l'ensemble de ce circuit 49'b est choisie très supérieure à la période du signal de test alternatif. On peut démontrer par le calcul que ce circuit présente alors une conductance négligeable pour ce signal alternatif.

La **figure 16** représente le schéma synoptique d'un exemple de réalisation préférentiel des circuits de commutation électronique 44' et 48'. Chacun comporte au moins un composant actif et :
- des moyens le commandant en tout ou rien pour activer ou désactiver le courant de téléalimentation,
- et des moyens le commandant de manière à limiter l'intensité du courant de téléalimentation, à une valeur prédéterminée et non dangereuse pour la liaison et le générateur 46.

Plus précisément, dans cet exemple, le circuit 44' ou 48' comporte :
- un accès 71 qui est couplé aux conducteurs D1 et D2 (Figure 8), respectivement A2 et B2 ;
- un accès de commande 72, relié au circuit de commande 43' (Figure 8) ;
- un accès 73 qui est relié à la résistance R3, respectivement R4 ;
- un transistor de type MOS, T4, dont le drain est relié à l'accès 71, et la source est reliée à l'accès 73 via une résistance R11;
- un transistor bipolaire NPN T3 dont le collecteur est relié à la grille du transistor T4 ; dont l'émetteur est relié à une tension d'alimentation -V via une résistance R9 ; et dont la base est reliée à l'accès de commande 72 ;
- un transistor bipolaire NPN T5 dont le collecteur est relié à la grille du transistor T4 ; dont l'émetteur est relié à l'accès 73 ; et dont la base est reliée au drain du transistor T4 ;
- une résistance R10 reliant la grille du transistor T4 à l'accès 73.

Un signal de commande binaire est appliqué à l'accès 72. Lorsqu'il bloque le transistor T3, le transistor T4 est bloqué, la téléalimentation est interrompue. Lorsqu'il sature le transistor T3, le transistor T4 est passant, la téléalimentation est appliquée. La chute de tension créée, dans la résistance R11, par le courant de téléalimentation, débloque le transistor T5 lorsqu'elle dépasse une valeur de seuil. Le transistor T5 commande alors le transistor T4 pour réduire sa conductance. Il en résulte une régulation de courant qui limite le courant de téléalimentation, à une valeur maximale essentiellement déterminée par la valeur de la résistance R11, le rapport des valeurs des résistances R9 et R10, et la tension -V. Pour compléter la protection du générateur 46 contre les courts-circuits, un fusible peut être intercalé au plus près de la borne positive du générateur 46.

Selon une variante de réalisation, ce circuit 44', 48' comporte en outre des moyens pour commander le composant actif de manière qu'il présente une conductance négligeable pour le courant alternatif de test. Par exemple, une capacité C5 peut être placée entre la grille du transistor T4 et l'accès 73. Le transistor T4 se comporte alors comme un générateur de courant continu, présentant une forte impédance au générateur de signal de test alternatif, notamment quand le transistor T5 n'est pas débloqué. La constante de temps de l'ensemble du circuit est choisie telle qu'elle rend négligeable la conductance du transistor T4 vis à vis du signal de test alternatif. Il n'y a plus besoin alors de dispositif de blocage 49 ou 49'.

## Revendications

1. **Procédé** d'alimentation d'un terminal dans un réseau local, via une liaison (L) destinée à relier le réseau local à ce terminal (5₁), consistant à détecter (101, 105) la présence d'un terminal téléalimentable (5₁), avant d'appliquer (S4) une tension de téléalimentation à ce terminal ;
**caractérisé en ce qu'**il consiste à :
- produire (S1, S2) au moins un signal de test sur au moins deux conducteurs de la liaison (L), ce signal ayant une tension très inférieure à la tension de téléalimentation, de sorte que le terminal ne peut être endommagé en aucun cas ;
- et détecter la présence d'une impédance prédéterminée dans le terminal distant, à partir d'un courant créé par le signal de test dans cette liaison.

2. Procédé d'alimentation selon la revendication 1, **caractérisé en ce que**, pour détecter une impédance prédéterminée dans le terminal distant, il consiste à détecter la présence d'un condensateur (21) dans le terminal distant.

3. Procédé d'alimentation selon la revendication 2, **caractérisé en ce que**, pour détecter la présence d'un condensateur (21) dans le terminal distant, il consiste à :
- appliquer un signal de test alternatif (S1) sur la liaison et vérifier (100, 101) que le terminal distant ne se comporte pas comme un circuit ouvert pour ce signal ;
- appliquer un signal de test en courant continu (S2) sur la liaison et vérifier (105) que le terminal distant se comporte comme un circuit ouvert pour ce signal ;
- et conclure à la présence d'un terminal téléalimentable si ces deux test ont des résultats positifs.

4. Procédé d'alimentation selon la revendication 1, adapté pour une liaison (L) comportant deux paires (A1, A2, B1, B2) d'émission/réception de données permettant chacune la transmission d'un courant de téléalimentation en mode commun, et d'autres conducteurs (C1, C2, D1, D2) pouvant être utilisés aussi pour la téléalimentation ;
**caractérisé en ce que** la détection d'un terminal distant téléalimentable consiste à :
- faire un premier test (S1, S2) pour détecter si le terminal est téléalimentable par ces deux paires d'émission/réception de données ;
- faire un second test (S4a) pour détecter si le terminal est téléalimentable par les autres conducteurs susceptibles d'être utilisés aussi pour la téléalimentation ;
- envoyer (111,113) un courant de téléalimentation dans les deux paires d'émission/réception de données seulement si le premier test montre que le terminal est téléalimentable par ces deux paires ;
- envoyer (110, 112) un courant de téléalimentation dans les autres conducteurs susceptibles d'être utilisés aussi pour la téléalimentation seulement si le second test montre que le terminal est téléalimentable par ces autres conducteurs.

5. Procédé d'alimentation selon la revendication 4, **caractérisé en ce que en ce que** le premier test (S1, S2) consiste à détecter la présence d'une première impédance prédéterminée dans le terminal, à partir d'un courant créé par un premier signal de test dans les deux paires d'émission/réception de données ; et le second test (S4a) consiste à détecter la présence d'une seconde impédance prédéterminée dans le terminal, à partir d'un courant créé par un second signal de test dans les autres conducteurs.

6. Procédé d'alimentation selon la revendication 5, **caractérisé en ce que** l'une des deux impédances prédéterminées est un court-circuit (51, 52) ; et l'autre impédance prédéterminée est une capacité (21).

7. Procédé d'alimentation selon la revendication 1, **caractérisé en ce que**, pour détecter une impédance prédéterminée dans le terminal distant, il consiste à détecter la présence d'un court-circuit (51, 52) dans le terminal distant.

8. **Dispositif de téléalimentation** d'un terminal dans un réseau local, via une liaison (L) destinée à relier le réseau local à ce terminal (5₁) comprenant des moyens (43) pour détecter (101, 105) la présence d'un terminal distant téléalimentable, et des moyens (46, R3, 43, 44, 49) pour appliquer (S4) une tension de téléalimentation à ce terminal quand la présence d'un terminal téléalimentable est détectée; **caractérisé en ce que** les moyens (43) pour détecter (101, 105) la présence d'un terminal téléalimentable comprennent :
- des moyens (45) pour produire (S1, S2) au moins un signal de test sur au moins deux conducteurs d'une liaison (L) destinée à relier le réseau local à un terminal distant (2₁), ce signal ayant une tension très inférieure à la tension de téléalimentation, de sorte que le terminal ne peut être endommagé en aucun cas ;
- et des moyens pour détecter la présence d'une impédance prédéterminée dans le terminal distant, à partir d'un courant créé par le signal de test dans cette liaison.

9. Dispositif selon la revendication 8, **caractérisé en ce que** les moyens pour détecter une impédance prédéterminée dans le terminal, comportent des moyens (47, R2, 43) pour détecter la présence d'un court-circuit en courant continu (51, 52) dans le terminal.

10. Dispositif selon la revendication 8, **caractérisé en ce que** les moyens pour détecter une impédance prédéterminée dans le terminal distant, comportent des moyens (45, R1, R2, C1, 43, 44) pour détecter la présence d'un condensateur (21) dans le terminal distant.

11. Dispositif selon la revendication 10, **caractérisé en ce que** les moyens pour détecter la présence d'un condensateur dans le terminal distant, comportent :
- des moyens (45, R1, C1, 44, 43) pour appliquer un signal de test en courant alternatif (S1) sur la liaison, et vérifier (100, 101) que le terminal distant ne se comporte pas comme un circuit ouvert pour ce signal ;
- des moyens (47, R3, R2, 44, 43) pour appliquer un signal de test en courant continu (S2) sur la liaison et vérifier (105) que le terminal distant se comporte comme un circuit ouvert pour ce signal ;
- et des moyens logiques (43) pour conclure (105) à la présence d'un terminal téléalimentable si ces deux test ont des résultats positifs.

12. Dispositif selon la revendication 8, **caractérisé en ce qu'**il comporte en outre :
- des moyens (47, 44, R2, 44, 43) pour détecter (S4, 107) une déconnexion du terminal téléalimentable ;
- et des moyens (43, 44) pour interrompre (S1) ce courant d'alimentation en réponse à la détection d'une déconnexion du terminal ;

13. Dispositif selon la revendication 8, **caractérisé en ce que** les moyens (47, 44, R2, 44, 43) pour détecter (S4, 107) une déconnexion du terminal téléalimentable, comportent :
- des moyens (45, R1, C1, 43) pour appliquer (S4) un signal de test en courant alternatif sur la liaison ;
- des moyens (43) pour vérifier (107) si le terminal se comporte comme un circuit ouvert pour ce signal de test.

14. Dispositif selon la revendication 8, **caractérisé en ce qu'**il comprend en outre :
- des moyens (R2, 43) pour détecter un court-circuit pour le courant continu d'alimentation, sur la liaison (L), après l'envois du courant de téléalimentation (S4);
- et des moyens (44, 43) pour interrompre (S5, 109) l'envois du courant de téléalimentation pendant une durée prédéterminée puis envoyer de nouveau (S4) un courant de téléalimentation, lors de la détection d'un court-circuit pour le courant continu d'alimentation.

15. Dispositif selon la revendication 8, **caractérisé en ce qu'**il comprend en outre :
- des moyens (45, R1, C1, 47, 43) pour conclure (103) à la présence d'un terminal non téléalimentable ou d'un court-circuit en courant continu si le terminal distant ne se comporte pas comme un circuit ouvert (100, 101) pour le signal de test en courant alternatif (S1), et ne se comporte pas comme un circuit ouvert (103, 104) pour le signal de test en courant continu (S2);
- des moyens (47, 44, R2, 43) pour appliquer alors un signal de test en courant continu (S3) sur la liaison pour vérifier que le terminal distant ou le court-circuit reste connecté ;
- et des moyens (43) conclure (106) que le terminal non téléalimentable ou le court-circuit a été déconnecté, et recommencer les tests de détection d'un condensateur selon la revendication 4 (S1, S2) si ce test en courant continu (S3) a un résultat négatif.

16. Dispositif selon la revendication 8, adapté pour une liaison (L) comportant deux paires (A1, A2, B1, B2) d'émission/réception de données permettant chacune la transmission d'un courant de téléalimentation en mode commun, et d'autres conducteurs (C1, C2, D1, D2) pouvant être utilisés aussi pour la téléalimentation ;
**caractérisé en ce que** les moyens pour détecter un terminal distant téléalimentable comportent :
- des moyens (45, R1, 44, C1, 43') pour faire un premier test (S1, S2) pour détecter si le terminal est téléalimentable par ces deux paires d'émission/réception de données ;
- des moyens (47, 44, R43') pour faire un second test (S4a) pour détecter si le terminal est téléalimentable par les autres conducteurs pouvant être utilisés aussi pour la téléalimentation ;
- des moyens (46, R3, 44, R2, 43') pour envoyer (111,113) un courant de téléalimentation dans les deux paires d'émission/réception de données seulement si le premier test montre que le terminal est téléalimentable par ces deux paires ;
- des moyens (46, R4, 48, 43') pour envoyer (110, 112) un courant de téléalimentation dans les autres conducteurs susceptibles d'être utilisés aussi pour la téléalimentation seulement si le second test montre que le terminal est téléalimentable par ces autres conducteurs.

17. Dispositif selon la revendication 16, **caractérisé en ce que en ce que** :
- les moyens pour faire le premier test (S1, S2) comportent des moyens (45, R1, 44, C1, 43') pour détecter la présence d'une première impédance prédéterminée dans le terminal, à partir d'un courant créé par un signal de test dans les deux paires d'émission/réception de données ;
- et les moyens pour le second test (S4a) comportent des moyens (47, 44, R43') pour détecter la présence d'une seconde impédance prédéterminée dans le terminal, à partir d'un courant créé par un signal de test dans les autres conducteurs.

18. Dispositif selon la revendication 17 , **caractérisé en ce que** l'une des deux impédances prédéterminées est un court-circuit (51, 52) ; et l'autre impédance prédéterminée est une capacité (21).

19. Dispositif de téléalimentation selon l'une des revendications 8 à 18, **caractérisé en ce que** les moyens (46, R3, 43, 44, 49) pour envoyer un courant d'alimentation dans la liaison comportent une source de tension continue (46) en série avec un circuit (49') de blocage d'un courant alternatif.

20. Dispositif de téléalimentation selon la revendication 19, **caractérisé en ce que** le circuit (49'a) de blocage d'un courant alternatif comporte au moins une diode (D5, D6, D7) à semi-conducteur dans le sens passant pour le courant continu de téléalimentation.

21. Dispositif de téléalimentation selon la revendication 20, **caractérisé en ce que** le circuit (49'b) de blocage d'un courant alternatif comporte au moins un transistor (T1) se comportant comme un générateur de courant continu.

22. Dispositif de téléalimentation selon l'une des revendications 8 à 21, **caractérisé en ce que** les moyens (46, R3, 43, 44, 48, 49) pour appliquer une tension de téléalimentation à ce terminal comportent une source de tension continue (46) en série avec au moins un circuit (44', 48') de commutation électronique comportant un composant actif (T4) et :
- des moyens (R9, T3) le commandant en tout ou rien pour activer ou désactiver le courant de téléalimentation,
- et des moyens (R11, T5) le commandant de manière à limiter l'intensité du courant de téléalimentation.

23. Dispositif de téléalimentation selon la revendication 22, **caractérisé en ce qu'**il comporte en outre des moyens (C5) pour commander le composant actif (T4) de manière qu'il présente une conductance négligeable pour le courant alternatif de test.

24. **Répéteur** téléalimentable (RP1) apte à être intercalé sur une liaison entre un équipement de réseau (3) comportant un dispositif de téléalimentation (31), et un autre équipement de réseau (4₁), dans un réseau local ;
**caractérisé en ce qu'**il comporte une alimentation (122) téléalimentée et dont l'entrée est couplée à la liaison de manière à être en parallèle avec l'entrée d'alimentation (22) de l'autre équipement de réseau, sur les conducteurs de la liaison qui assurent la téléalimentation ;
et **en ce que** cette alimentation (122) présente une impédance d'entrée dont le module est très supérieur au module de l'impédance d'entrée d'alimentation qui est caractéristique des équipements aptes à être téléalimentés (4₁), susceptibles d'être branchés en aval de ce répéteur.

25. - **Concentrateur** (3') apte à être intercalé sur une liaison entre un équipement de réseau (2'), comportant un dispositif de téléalimentation (231), et au moins un autre équipement de réseau (6₁ ...6_{N}), dans un réseau local ; comprenant des moyens (43) pour détecter (101, 105) la présence d'un autre équipement de réseau (6₁, ...6_{N}) téléalimentable, et des moyens (46, R3, 43, 44, 49) pour appliquer (S4) une tension de téléalimentation à cet autre équipement de réseau (6₁, ...6_{N}), quand la présence de cet autre équipement de réseau téléalimentable est détectée ;
**caractérisé en ce que** les moyens (43) pour détecter (101, 105) la présence d'un un autre équipement de réseau (6₁, ...6_{N}) téléalimentable comprennent pour chacun de ses ports susceptibles d'être raccordés à un autre équipement de réseau :
- des moyens (45) pour produire (S1, S2) au moins un signal de test sur au moins deux conducteurs d'une liaison (L) destinée à relier ce concentrateur à un autre équipement de réseau (6₁), ce signal ayant une tension très inférieure à la tension de téléalimentation, de sorte que l'autre équipement de réseau ne peut être endommagé en aucun cas ;
- des moyens (43) pour détecter (101, 105) la présence d'un autre équipement (6₁) téléalimentable, en détectant la présence d'une impédance prédéterminée dans cet autre équipement, à partir d'un courant créé par le signal de test dans cette liaison.

26. Concentrateur selon la revendication 25, téléalimentable, **caractérisé en ce qu'**il comprend au moins une impédance capacitive prédéterminée (221) couplée à au moins deux conducteurs de la liaison, et qui est caractéristique des équipements de réseau aptes à être téléalimentés.

27. **Terminal** (5₁) apte à être relié à un réseau local, et à être téléalimenté par une liaison (L), **caractérisé en ce qu'**il comprend au moins un **court-circuit** (51, 52) connecté à au moins deux conducteurs de la liaison, et qui identifie les terminaux aptes à être téléalimentés.

## Claims

1. **A method** for powering a terminal within a local area network, via a link (L) intended to connect the local area network to that terminal (5₁), consisting of detecting (101, 105) the presence of a terminal that may be remotely powered (5₁), before applying (S4) a remote-power voltage to that terminal;
**characterized in that** it consists of:
- producing (SI, S2) at least one test signal over at least two conductors of the link (L), said signal having a voltage much less than the remote-power voltage, such that the terminal may not be damaged under any circumstances;
- and detecting the presence of a predetermined impedance within the remote terminal, based on a current created by the test signal within that link.

2. A method for powering according to claim 1, **characterized in that**, in order to detect a predetermined impedance within the remote terminal, it consists of detecting the presence of a capacitor (21) within the remote terminal.

3. A method for powering according to claim 2, **characterized in that**, in order to detect the presence of a capacitor (21) within the remote terminal, it consists of:
- applying an alternating-current test signal (S1) over the link and verifying (100, 101) that the remote terminal does not behave like an open circuit for that signal;
- applying a direct-current test signal (S2) over the link and verifying (105) that the remote terminal does behave like an open circuit for that signal;
- and deciding that a terminal that may be remotely powered is present if both these tests have positive results.

4. A method for powering according to claim 1, suitable for a link (L) comprising two data sending/receiving pairs (A1, A2, B1, B2) each enabling the transmission of a remote-power current in common mode, and other conductors (C1, C2, D1, D2) that may also be used for remote powering;
**characterized in that** detecting a remote terminal that may be remotely powered consists of:
- running a first test (S1, S2) to detect whether the terminal may be remotely powered by these two data sending/receiving pairs;
- running a second test (S4a) to detect whether the terminal may be remotely powered by other conductors that could also be used for remote powering;
- sending (111, 113) a remote-power current within two data sending/receiving pairs only if the first test shows that the terminal may be remotely powered by these two pairs;
- sending (110, 112) a remote-power current within the other conductors that can also be used for remote powering only if the second test shows that the terminal may be remotely powered by these other conductors.

5. A method for powering according to claim 4, **characterized in that** the first test (S1, S2) consists of detecting the presence of a first predetermined impedance within the terminal, based on a current created by a first test signal second test within the two data sending/receiving pairs; and the second test (S4a) consists of detecting the presence of a second predetermined impedance within the terminal, based on a current created by a second test signal within the other conductors.

6. A method for powering according to claim 5, **characterized in that** one of the two predetermined impedances is a short-circuit (51, 52); and the other predetermined impedance is a capacitance (21).

7. A method for powering according to claim 1, **characterized in that**, in order to detect a predetermined impedance within the remote terminal, it consists of detecting the presence of a short-circuit (51, 52) within the remote terminal.

8. **An apparatus for remote-powering** a terminal within a local area network, via a link (L) intended to connect that local area network to that terminal (5₁) comprising means (43) for detecting (101, 105) the presence of a remote terminal that may be remotely powered, and means (46, R3, 43, 44, 49) for applying (S4) a remote-power voltage to that terminal when the presence of a terminal that may be remotely powered is detected; **characterized in that** the means (43) for detecting (101, 105) the presence of a terminal that may be remotely powered comprise:
- means (45) for producing (S1, S2) at least one test signal over at least two conductors of a link (L) intended to connect the local area network to a remote terminal (2₁), said signal having a voltage much less than the remote-power voltage, such that the terminal may not be damaged under any circumstances;
- and detecting the presence of a predetermined impedance within the remote terminal, based on a current created by the test signal within that link.

9. An apparatus according to claim 8, **characterized in that** the means for detecting a predetermined impedance within the terminal comprise means (47, R2, 43) for detecting the presence of a direct-current short-circuit (51, 52) within the terminal.

10. An apparatus according to claim 8, **characterized in that** the means for detecting a predetermined impedance within the remote terminal comprise means (45, R1, R2, C1, 43, 44) for detecting the presence of the capacitor (21) within the remote terminal.

11. An apparatus according to claim 10, **characterized in that** the means for detecting the presence of a capacitor within the remote terminal comprise:
- means (45, R1, C1, 44, 43) for applying an alternating-current test signal (S1) over the link, and verifying (100, 101) that the remote terminal does not behave like an open circuit for that signal;
- means (47, R3, R2, 44, 43) for applying a direct-current test signal (S2) over the link, and verifying (105) that the remote terminal does behave like an open circuit for that signal;
- and logic means (43) for deciding (105) that a terminal that may be remotely powered is present if both of these tests have positive results.

12. An apparatus according to claim 8, **characterized in that** it further comprises:
- means (47, 44, R2, 44, 43) for detecting (S4, 107) a disconnection of the terminal that may be remotely powered;
- and means (43, 44) for interrupting (S1) this powering current in response to the detection of a disconnection of the terminal;

13. An apparatus according to claim 8, **characterized in that** the means (47, 44, R2, 44, 43) for detecting (S4, 107) a disconnection of the terminal that may be remotely powered comprise:
- means (45, R1, C1, 43) for applying (S4) an alternating-current test signal over the link;
- means (43) for verifying (107) whether the terminal behaves like an open circuit for that test signal.

14. An apparatus according to claim 8, **characterized in that** it further comprises:
- means (R2, 43) for detecting a short-circuit for the supply direct current over the link (L), after the sending of the remote-power current (S4);
- and means (44, 43) for interrupting (S5, 109) the sending of the remote-power current for a predetermined duration of time, then sending (S4) another remote-power current once a short-circuit for the supply direct current is detected.

15. An apparatus according to claim 8, **characterized in that** it further comprises:
- means (45, R1, C1, 47, 43) for deciding (103) that a terminal that may not be remotely powered or a direct-current short-circuit is present if the remote terminal does not behave like an open circuit (100, 101) for the alternating-current test signal (Si), and to not behave like an open circuit (103, 104) for the direct-current test signal (S2);
- means (47, 44, R2, 43) for applying a direct-current test signal (S3) over the link in order to verify that the remote terminal or the short-circuit has remained connected;
- and means (43) for deciding (106) that the terminal that may not be remotely powered or the short-circuit has been disconnected, and restarting the tests for detecting a capacitor according to claim 4 (S1, S2) if that direct-current test (S3) has a negative result.

16. An apparatus according to claim 8, suitable for a link (L) comprising two data sending/receiving pairs (A1, A2, B1, B2) each enabling the transmission of a remote-power current in common mode, and other conductors (C1, C2, D1, D2) that may also be used for remote powering;
**characterized in that** the means for detecting a remote terminal that may be remotely powered comprise:
- means (45, R1, 44, C1, 43') for running a first test (Si, S2) to detect whether the terminal may be remotely powered by these two data sending/receiving pairs;
- means (47, 44, R43') for running a second test (S4a) to detect whether the terminal may be remotely powered by the other conductors that may also be used for remote powering;
- means (46, R3, 44, R2, 43') for sending (111, 113) a remote-power current within the two data sending/receiving pairs only if the first test shows that the terminal may be remotely powered by these two pairs;
- means (46, R4, 48, 43') for sending (110, 112) a remote-power current within the other conductors that could also be used for remote powering only if the second test shows that the terminal may be remotely powered by these other conductors.

17. An apparatus according to claim 16, **characterized in that**:
- the means for running the first test (S1, S2) comprise means (45, R1, 44, C1, 43') for detecting the presence of a first predetermined impedance within the terminal, based on a current created by a test signal within the two data sending/receiving pairs;
- and the means for running the second test (S4a) comprise means (47, 44, R43') for detecting the presence of a second predetermined impedance within the terminal, based on a current created by a test signal within the other conductors.

18. An apparatus according to claim 17, **characterized in that** one of the two predetermined impedances is a short-circuit (51, 52); and the other predetermined impedance is a capacitance (21).

19. An apparatus for remote-powering according to one of the claims 8 to 18, **characterized in that** the means (46, R3, 43, 44, 49) for sending a supply current within the link comprise a source of direct-current voltage (46) serially with an alternating-current blocking circuit (49').

20. An apparatus for remote-powering according to claim 19, **characterized in that** the alternating-current blocking circuit (49'a) comprises at least one forward-bias semi-conductor diode (D5, D6, D7) for the remote-powering direct current.

21. A remote-powering apparatus according to claim 20, **characterized in that** the alternating-current blocking circuit (49'b) comprises at least one transistor (T1) behaving as a direct-current generator.

22. A remote-powering apparatus according to one of the claims 8 to 21, **characterized in that** the means (46, R3, 43, 44, 48, 49) for applying a remote-powering voltage to that terminal comprises a source of continuous voltage (46) serial with at least one electronic-switching circuit (44', 48') comprising an active component (T4) and:
- means (R9, T3) controlling it by turning it on or off to enable or disable the remote-power current,
- and means (R11, T5) controlling it in such a way as to limit the intensity of the remote-power current.

23. A remote-powering apparatus according to claim 22, **characterized in that** it further comprises the means (C5) to control the active component (T4) in such a way as to exhibit negligible conductance for the test alternating current.

24. **A repeater** that may be remotely powered (RP1), capable of being interspersed on a link between a network equipment (3) comprising a remote-powering apparatus (31), and another network equipment (4₁), within a local area network;
**characterized in that** it comprises a remotely powered supply (122) whose input is coupled to the link in such a way as to be in parallel with the supply input (22) of the other network input, over the conductors of the link which provide remote powering;
and **in that** this supply (122) exhibits an input impedance whose modulus is much greater than the modulus of the supply input impedance which is characteristic of the equipment that may be remotely powered (4₁), that could be plugged in downstream of that repeater.

25. A hub (3') capable of being interspersed on a link between a network equipment (2'), comprising a remote-powering apparatus (231), and at least one other network equipment (6₁, ...6_{N}), within a local area network; comprising means (43) for detecting (101, 105) the presence of another network equipment (6₁, ...6_{N}) that may be remotely powered, and means (46, R3, 43, 44, 49) for applying (S4) a remote-power voltage to that other network equipment (6₁, ...6_{N}), when the presence of that other network equipment that may be remotely powered is detected;
**characterized in that** the means (43) for detecting (101, 105) the presence of another network equipment (6₁, ...6_{N}) that may be remotely powered comprise, for of each of its ports that could be connected to another network device;
- means (45) for producing (Si, S2) at least one test signal over at least two conductors of a link (L) intended to connect that hub to another network equipment (6₁), said signal having a voltage much less than the remote-powering voltage, such that the other network equipment may not be damaged under any circumstances;
- means (43) for detecting (101, 105) the presence of another equipment (6,) that may be remotely powered, by detecting the presence of a predetermined impedance **in that** other equipment, based on a current created by the test signal in this link.

26. A hub according to claim 25, which may be remotely powered, **characterized in that** it comprises at least one predetermined capacitative impedance (221) coupled to at least two conductors of the link, and which is characteristic of the network equipments that may be remotely powered.

27. **A terminal** (51) capable of being connected to a local area network, and to be remotely powered by a link (L), **characterized in that** it comprises at least one short-circuit (51, 52) connected to at least two conductors of the link, and which identifies the terminals which are capable of being remotely powered.

## Patentansprüche

1. **Verfahren** zur Versorgung eines Endgeräts in einem lokalen Netzwerk über eine Verbindung (L), welche dazu bestimmt ist, das lokale Netzwerk mit diesem Endgerät (5₁) zu verbinden, und darin besteht, das Vorhandensein eines fernspeisbaren Endgeräts (5₁) zu erkennen (101, 105), bevor an dieses Endgerät eine Fernspeisespannung angelegt (S4) wird;
**dadurch gekennzeichnet, dass** es darin besteht:
- Mindestens ein Testsignal auf mindestens zwei Leitern der Verbindung (L) zu erzeugen (S1, S2), wobei die Spannung dieses Signals bedeutend niedriger ist als die Fernspeisespannung, so dass das Endgerät auf keinen Fall beschädigt werden kann;
- und, ausgehend von einem vom Testsignal in dieser Verbindung erzeugten Stroms, das Vorhandensein einer vorherbestimmten Impedanz im entfernten Endgerät zu erkennen.

2. Verfahren zur Versorgung nach Anspruch 1, **dadurch gekennzeichnet, dass** es zum Erkennen einer vorbestimmten Impedanz im entfernten Endgerät darin besteht, das Vorhandensein eines Kondensators (21) im entfernten Endgerät zu erkennen.

3. Verfahren zur Versorgung nach Anspruch 2, **dadurch gekennzeichnet, dass** es zum Erkennen des Vorhandenseins eines Kondensators (21) im entfernten Endgerät darin besteht:
- Auf der Verbindung ein Wechselstrom-Testsignal (S1) anzulegen und zu überprüfen (100, 101), dass sich das entfernte Endgerät nicht wie ein offener Stromkreis für dieses Signal verhält;
- auf der Verbindung ein Gleichstrom-Testsignal (S2) anzulegen und zu überprüfen (105), dass sich das entfernte Endgerät wie ein offener Stromkreis für dieses Signal verhält;
- und auf das Vorhandensein eines fernspeisbaren Endgeräts zu schließen, wenn beide Tests positiv ausfallen.

4. Verfahren zur Versorgung nach Anspruch 1, bestimmt für eine Verbindung (L) mit zwei Datenausgabe-/Empfangsvorrichtungspaaren (A1, A2, B1, B2), welche jeweils die Übertragung eines Fernspeisestroms im Gleichtaktmodus ermöglichen, und mit weiteren Leitern (C1, C2, D1, D2), die ebenfalls für die Fernspeisung verwendet werden können;
**dadurch gekennzeichnet, dass** das Erkennen eines entfernten fernspeisbaren Endgeräts darin besteht:
- Einen ersten Test (S1, S2) durchzuführen, um festzustellen, ob das Endgerät von diesen zwei Datenausgabe-/Empfangsvorrichtungspaaren ferngespeist werden kann;
- einen zweiten Test (S4a) durchzuführen, um festzustellen, ob das Endgerät von den anderen ebenfalls für die Fernspeisung verwendbaren Leitern ferngespeist werden kann;
- einen Fernspeisestrom nur dann an die zwei Datenausgabe-/Empfangsvorrichtungspaare zu senden (111, 113), wenn der erste Test ergibt, dass das Endgerät von diesen zwei Paaren ferngespeist werden kann;
- einen Fernspeisestrom nur dann in die anderen ebenfalls für die Fernspeisung benutzbaren Leiter zu senden (110, 112), wenn der zweite Test ergibt, dass das Endgerät von diesen anderen Leitern ferngespeist werden kann.

5. Verfahren zur Versorgung nach Anspruch 4, **dadurch gekennzeichnet, dass** der erste Test (S1, S2) darin besteht, das Vorhandensein einer ersten vorherbestimmten Impedanz im Endgerät ausgehend von einem von einem ersten Testsignal in den zwei Datenausgabe-/Empfangsvorrichtungspaaren erzeugten Strom zu erkennen; und dass der zweite Test (S4a) darin besteht, das Vorhandensein einer zweiten vorherbestimmten Impedanz im Endgerät ausgehend von einem von einem zweiten Testsignal in den anderen Leitern erzeugten Strom zu erkennen.

6. Verfahren zur Versorgung nach Anspruch 5, **dadurch gekennzeichnet, dass** eine der zwei vorherbestimmten Impedanzen ein Kurzschluss (51, 52) und die andere vorherbestimmte Impedanz eine Kapazität (21) ist.

7. Verfahren zur Versorgung nach Anspruch 1, **dadurch gekennzeichnet, dass** es für das Erkennen einer vorherbestimmten Impedanz im entfernten Endgerät darin besteht, das Vorhandensein eines Kurzschlusses (51, 52) im entfernten Endgerät zu erkennen.

8. **Vorrichtung für die Fernspeisung** eines Endgeräts in einem lokalen Netzwerk über eine Verbindung (L), welche dazu bestimmt ist, das lokale Netzwerk mit diesem Endgerät (5₁) zu verbinden, umfassend Mittel (43) zum Erkennen (101, 105) des Vorhandenseins eines entfernten fernspeisbaren Endgeräts, sowie Mittel (46, R3, 43, 44, 49) zum Anlegen (S4) einer Fernspeisespannung an diesem Endgerät, wenn das Vorhandensein eines fernspeisbaren Endgeräts erkannt wird; **dadurch gekennzeichnet, dass** die Mittel (43) zum Erkennen (101, 105) des Vorhandenseins eines fernspeisbaren Endgeräts umfassen:
- Mittel (45) zum Erzeugen (S1, S2) mindestens eines Testsignals auf mindestens zwei Leitern einer Verbindung (L), welche dazu bestimmt ist, das lokale Netzwerk mit einem entfernten Endgerät 2₁) zu verbinden, wobei die Spannung dieses Signals bedeutend niedriger ist als die Fernspeisespannung, so dass das Endgerät auf keinen Fall beschädigt werden kann;
- und Mittel zum Erkennen des Vorhandenseins einer vorherbestimmten Impedanz in diesem entfernten Endgerät, ausgehend von einem vom Testsignal in dieser Verbindung erzeugten Stroms.

9. Vorrichtung nach Anspruch 8, **dadurch gekennzeichnet, dass** die Mittel zum Erkennen einer vorherbestimmten Impedanz im Endgerät Mittel (47, R2, 43) zum Erkennen des Vorhandenseins eines Gleichstrom-Kurzschlusses (51, 52) im Endgerät umfassen.

10. Vorrichtung nach Anspruch 8, **dadurch gekennzeichnet, dass** die Mittel zum Erkennen einer vorherbestimmten Impedanz im entfernten Endgerät Mittel (45, R1, R2, C1, 43, 44) zum Erkennen des Vorhandenseins eines Kondensators (21) im entfernten Endgerät umfassen.

11. Vorrichtung nach Anspruch 10, **dadurch gekennzeichnet, dass** die Mittel zum Erkennen des Vorhandenseins eines Kondensators im entfernten Endgerät umfassen:
- Mittel (45, R1, C1, 44, 43) zum Anlegen eines Wechselstrom-Testsignals (S1) auf der Verbindung, und zum Überprüfen (100, 101), dass sich das entfernte Endgerät nicht wie ein offener Stromkreis für dieses Signal verhält;
- Mittel (47, R3, R2, 44, 43) zum Anlegen eines Gleichstrom-Testsignals (S2) auf der Verbindung, und zum Überprüfen (105), dass sich das entfernte Endgerät wie ein offener Stromkreis für dieses Signal verhält;
- und logische Mittel (43), welche auf das Vorhandensein eines fernspeisbaren Endgeräts schließen (105), wenn beide Tests positiv ausfallen.

12. Vorrichtung nach Anspruch 8, **dadurch gekennzeichnet, dass** sie weiterhin umfasst:
- Mittel (47, 44, R2, 44, 43) zum Erkennen (S4, 107) einer Unterbrechung der Verbindung zum fernspeisbaren Endgerät;
- und Mittel (43, 44) zum Unterbrechen (S1) dieser Stromversorgung in Reaktion auf das Erkennen einer Unterbrechung der Verbindung zum Endgerät.

13. Vorrichtung nach Anspruch 8, **dadurch gekennzeichnet, dass** die Mittel (47, 44, R2, 44, 43) zum Erkennen (S4, 107) einer Unterbrechung der Verbindung zum fernspeisbaren Endgerät umfassen:
- Mittel (45, R1, C1, 43) zum Anlegen (S4) eines Wechselstrom-Testsignals auf der Verbindung;
- Mittel (43) zum Überprüfen (107), ob sich das Endgerät wie ein offener Stromkreis für dieses Signal verhält.

14. Vorrichtung nach Anspruch 8, **dadurch gekennzeichnet, dass** sie weiterhin umfasst:
- Mittel (R2, 43) zum Erkennen eines Kurzschlusses für den Versorgungsgleichstrom auf der Verbindung (L) nach dem Aussenden des Fernspeisestroms (S4);
- und Mittel (44, 43) zum Unterbrechen (S5, 109) des Aussendens des Fernspeisestroms während einer vorherbestimmten Dauer, und zum erneuten Aussenden (S4) eines Fernspeisestroms, wenn ein Kurzschluss für den Versorgungsgleichstrom erkannt wird.

15. Vorrichtung nach Anspruch 8, **dadurch gekennzeichnet, dass** sie weiterhin umfasst:
- Mittel (45, R1, C1, 47, 43), um auf das Vorhandensein eines nicht fernspeisbaren Endgeräts oder eines Gleichstrom-Kurzschlusses zu schließen (103), wenn sich das entfernte Endgerät nicht wie ein offener Stromkreis (100, 101) für das Wechselstrom-Testsignal (S1) und nicht wie ein offener Stromkreis (103, 104) für das Gleichstrom-Testsignal (S2) verhält;
- Mittel (47, 44, R2, 43) zum Anlegen eines Gleichstrom-Testsignals (S3) auf der Verbindung, um zu überprüfen, dass das entfernte Endgerät oder der Kurzschluss verbunden bleibt;
- und Mittel (43), um darauf zu schließen (106), dass die Verbindung zu dem nicht fernspeisbaren Endgerät oder zum Kurzschluss unterbrochen wurde, und um erneut die Tests zum Erkennen eines Kondensateurs gemäß Anspruch 4 (S1, S2) durchzuführen, wenn dieser Gleichstrom-Test (S3) ein negatives Ergebnis ergibt.

16. Vorrichtung nach Anspruch 8, geeignet für eine Verbindung (L) mit zwei Datenausgabe-/Empfangsvorrichtungspaaren (A1, A2, B1, B2), welche jeweils die Übertragung eines Fernspeisestroms im Gleichtaktmodus ermöglichen, und mit weiteren Leitern (C1, C2, D1, D2), die ebenfalls für die Fernspeisung verwendet werden können;
**dadurch gekennzeichnet, dass** die Mittel zum Erkennen eines entfernten fernspeisbaren Endgeräts umfassen:
- Mittel (45, R1, 44, C1, 43') zum Durchführen eines ersten Tests (S1, S2), um festzustellen, ob das Endgerät von diesen zwei Datenausgabe-/Empfangsvorrichtungspaaren ferngespeist werden kann;
- Mittel (47, 44, R43') zum Durchführen eines zweiten Tests (S4a), um festzustellen, ob das Endgerät von den anderen ebenfalls für die Fernspeisung verwendbaren Leitern ferngespeist werden kann;
- Mittel (46, R3, 44, R2, 43') zum Aussenden (111, 113) eines Fernspeisestroms an die zwei Datenausgabe-/Empfangsvorrichtungspaare nur dann, wenn der erste Test ergibt, dass das Endgerät von diesen zwei Paaren ferngespeist werden kann;
- Mittel (46, R4, 48, 43') zum Aussenden (110, 112) eines Fernspeisestroms an die anderen zwei ebenfalls für die Fernspeisung verwendbaren Leiter nur dann, wenn der zweite Test ergibt, dass das Endgerät von diesen anderen Leitern ferngespeist werden kann.

17. Verfahren nach Anspruch 16, **dadurch gekennzeichnet, dass**:
- Die Mittel zum Durchführen des ersten Tests (S1, S2) Mittel (45, R1, 44, C1, 43') zum Erkennen des Vorhandenseins einer ersten vorherbestimmten Impedanz im Terminal ausgehend von einem von einem Testsignal in den zwei Datenausgabe-/Empfangsvorrichtungspaaren erzeugten Strom umfassen;
- und die Mittel für den zweiten Test (S4a) Mittel (47, 44, R43') zum Erkennen des Vorhandenseins einer zweiten vorherbestimmten Impedanz im Terminal ausgehend von einem von einem Testsignal in den anderen Leitern erzeugten Strom umfassen.

18. Vorrichtung nach Anspruch 17, **dadurch gekennzeichnet, dass** eine der zwei vorbestimmten Impedanzen ein Kurzschluss (51, 52) und die andere vorbestimmte Impedanz eine Kapazität (21) ist.

19. Vorrichtung zur Fernversorgung nach einem der Ansprüche 8 bis 18, **dadurch gekennzeichnet, dass** die Mittel (46, R3, 43, 44, 49) zum Aussenden eines Speisestroms in die Verbindung eine Gleichspannungsquelle (46) umfassen, welche mit einem Blockierkreis (49') eines Wechselstroms in Reihe geschaltet ist.

20. Vorrichtung zur Fernversorgung nach Anspruch 19, **dadurch gekennzeichnet, dass** der Blockierkreis (49'a) eines Wechselstroms mindestens eine Halbleiterdiode (D5, D6, D7) in der Fließrichtung des Fernspeisegleichstroms umfasst.

21. Vorrichtung zur Fernversorgung nach Anspruch 20, **dadurch gekennzeichnet, dass** der Blockierkreis (49'b) eines Wechselstroms mindestens einen Transistor (T1) umfasst, welcher sich wie ein Gleichstromgenerator verhält.

22. Vorrichtung zur Fernversorgung nach einem der Ansprüche 8 bis 21, **dadurch gekennzeichnet, dass** die Mittel (46, R3, 43, 44, 48, 49) zum Anlegen einer Fernspeisespannung an diesem Endgerät eine Gleichspannungsquelle (46) umfassen, welche mit mindestens einem eine aktive Komponente (T4) umfassenden elektronischen Schaltkreis (44', 48') in Reihe geschaltet ist, und
- Mittel (R9, T3), welche diesen im Alles-oder-Nichts-Modus steuern, um den Fernspeisestrom zu aktivieren oder zu deaktivieren,
- und Mittel (R11, T5), welche diesen derart steuern, dass die Stärke des Fernspeisestroms begrenzt wird.

23. Vorrichtung zur Fernversorgung nach Anspruch 22, **dadurch gekennzeichnet, dass** sie weiterhin Mittel (C5) zur Steuerung der aktiven Komponente (T4) umfasst, um deren Konduktanz auf einen für den Testwechselstrom unbedeutenden Wert zu begrenzen.

24. Fernspeisbarer **Verstärker** (RP1) zum Zwischenschalten auf einer Verbindung zwischen einem Netzwerkgerät (3) mit einer Fernspeisevorrichtung (31) und einem anderen Netzwerkgerät (4₁) in einem lokalen Netzwerk;
**dadurch gekennzeichnet, dass** er eine ferngespeiste Versorgung (122), deren Eingang derart an die Verbindung gekoppelt ist, dass er parallel zum Versorgungseingang (22) des anderen Netwerkgeräts auf den die Fernspeisung gewährleistenden Leitern der Verbindung angeordnet ist, umfasst;
und dass diese Versorgung (122) eine Eingangsimpedanz aufweist, deren Modul bedeutend größer ist als das Modul der Impedanz des Versorgungseingangs, welche für die fernspeisbaren und diesem Verstärker nachschaltbaren Geräte (4₁) charakteristisch ist.

25. **Konzentrator** (3') zum Zwischenschalten auf einer Verbindung zwischen einem Netzwerkgerät (2') mit einer Fernspeisevorrichtung (231) und mindestens einem anderen Netzwerkgerät (6₁, ... 6_{N}) in einem lokalen Netzwerk, mit Mitteln (43) zum Erkennen (101, 105) des Vorhandenseins eines anderen fernspeisbaren Netzwerkgeräts (6₁, ... 6_{N}), und Mitteln (46, R3, 43, 44, 49) zum Anlegen (S4) einer Fernspeisespannung an diesem anderen Netzwerkgerät (6₁, ... 6_{N}), wenn das Vorhandensein dieses anderen fernspeisbaren Netzwerkgeräts erkannt wird;
**dadurch gekennzeichnet, dass** die Mittel (43) zum Erkennen (101, 105) des Vorhandenseins eines anderen fernspeisbaren Netzwerkgeräts (6₁, ... 6_{N}) für einen jeden seiner an ein anderes Netzwerkgerät anschließbaren Ports umfassen:
- Mittel (45) zum Erzeugen (S1, S2) mindestens eines Testsignals auf mindestens zwei Leitern (L) einer Verbindung, welche dazu bestimmt ist, diesen Konzentrator mit einem anderen Netzwerkgerät (6₁) zu verbinden, wobei die Spannung dieses Signals bedeutend niedriger ist als die Fernspeisespannung, so dass das Endgerät auf keinen Fall beschädigt werden kann;
- Mittel (43) zum Erkennen (101, 105) des Vorhandenseins eines anderen fernspeisbaren Geräts (6₁), indem das Vorhandensein einer vorherbestimmten Impedanz in diesem anderen Gerät ausgehend von einem von dem Testsignal in dieser Verbindung erzeugten Strom erkannt wird.

26. Konzentrator nach Anspruch 25, fernspeisbar, **dadurch gekennzeichnet, dass** er mindestens eine vorherbestimmte kapazitive Impedanz (221) umfasst, welche an mindestens zwei Leiter der Verbindung gekoppelt und für die fernspeisbaren Netzwerkgeräte charakteristisch ist.

27. **Endgerät** (5₁), dazu ausgelegt, mit einem lokalen Netzwerk verbunden und von einer Verbindung (L) ferngespeist zu werden, **dadurch gekennzeichnet, dass** es mindestens einen **Kurzschluss** (51, 52) umfasst, welcher an mindestens zwei Leiter der Verbindung angeschlossen ist und die fernspeisbaren Endgeräte identifiziert.
